# EUROPÄISCHE PATENTSCHRIFT

(11) **EP 2 574 614 B1**
(45) Veröffentlichungstag und Bekanntmachung des Hinweises auf die Patenterteilung: **01.05.2019**
(21) Anmeldenummer: 11183619.3
(22) Anmeldetag: 30.09.2011
(51) Int. Cl.: C07H 11/04, C08K 5/00, C08K 5/14, C08K 5/372, C08K 5/521, C09K 21/12, C08L 25/06, C08J 9/00

(54) **Flammgeschützte Polymerschaumstoffe mit halogenfreien, phosphorhaltigen Flammschutzmitteln auf Zuckerbasis**
Flame-retardant polymer foams with halogen-free flame-retardant agents containing phosphorous on a sugar basis
Mousses polymères ignifuges dotées de moyens de protection contre les flammes sans halogène, contenant du phosphore et à base de sucre

(43) Veröffentlichungstag der Anmeldung: 03.04.2013
(73) Patentinhaber: BASF SE, 67056 Ludwigshafen am Rhein (DE)
(72) Erfinder: Bellin, Ingo, Dr., 68307 Mannheim (DE); Denecke, Hartmut, 67071 Ludwigshafen (DE); Fuchs, Sabine, Dr., 68167 Mannheim (DE); Fleckenstein, Christoph, Dr., 63579 Freigericht (DE); Deglmann, Peter, Dr., 68163 Mannheim (DE); Hofmann, Maximilian, Dr., Island South Hongkong (HK); Spies, Patrick, Dr., 67433 Neustadt (DE); Hahn, Klaus, Dr., 67281 Kirchheim (DE); Massonne, Klemens, Dr., 67098 Bad Dürkheim (DE); Janssens, Geert, Dr., 9100 Nieuwkerken-Waas (BE)
(74) Vertreter: BASF IP Association

(56) Entgegenhaltungen:
- WO-A1-99/10429
- WO-A1-99/28372
- WO-A1-2011/083009
- DE-A1- 2 249 103

## Beschreibung

Die Erfindung betrifft ein Flammschutzsystem, das eine Phosphorverbindung und Synergisten enthält. Darüber hinaus betrifft die Erfindung eine Polymerzusammensetzung, insbesondere als Schaumstoff, enthaltend das Flammschutzsystem, Verfahren zur Herstellung der Polymerzusammensetzung und die Verwendung der geschäumten Polymerzusammensetzung als Dämm- und/oder Isoliermaterial.

Die Ausrüstung von Polymeren, insbesondere Schaumstoffen, mit Flammschutzmitteln ist für eine Vielzahl von Anwendungen von Bedeutung, beispielsweise für Polystyrol-Partikelschaumstoffe aus expandierbarem Polystyrol (EPS) oder Polystyrol-Extrusionsschaumstoffplatten (XPS) zum Isolieren von Gebäuden.

Derzeit werden als Flammschutzmittel in Kunststoffen hauptsächlich polyhalogenierte Kohlenwasserstoffe, gegebenenfalls in Kombination mit geeigneten Synergisten, beispielsweise organischen Peroxiden oder stickstoffhaltigen Verbindungen eingesetzt. Ein typischer Vertreter dieser klassischen Flammschutzmittel ist Hexabromcyclododecan (HBCD), welches beispielsweise in Polystyrol Anwendung findet. Aufgrund von Bioakkumulation sowie Persistenz von einigen polyhalogenierten Kohlenwasserstoffen ist es ein großes Bestreben in der Kunststoffindustrie, halogenierte Flammschutzmittel zu substituieren.

Organische Phosphorverbindungen als Flammschutzmittel in Kombination mit elementarem Schwefel oder organischen Sulfiden als Synergisten für den Einsatz in Styrolpolymeren werden zum Beispiel in EP-A 0 806 451 beschrieben. Zur Erreichung eines zufriedenstellenden Flammschutzes ist dabei meist eine Beladung von mindestens 10 Gew.-Teilen an Phosphorverbindung und Schwefel(verbindung), bezogen auf 100 Gew.-Teile des Polymers, erforderlich.

Die WO 2011/000018 A und die WO 2011/000019 A beschreiben die Synthese von phosphorhaltigen Flammschutzmitteln auf der Basis von 9,10-Dihydro-9-oxa-10-phosphaphenanthren-10-oxid (DOPO) sowie deren Einsatz zusammen mit Schwefel bzw. schwefelhaltigen Verbindungen als Synergisten in kompaktem Polystyrolgranulat und in expandierbarem Polystyrol bzw. expandierten Polystyrolschäumen. Zum Bestehen der Brandschutztests in Polystyrolschäumen waren hier jedoch meist Gesamtmengen an Flammschutzmittel und Synergist von mehr als 9 Gew.-% erforderlich.

Die WO 2011/035357 A beschreibt die Verwendung von DOPO und DOPO-Derivaten zusammen mit Schwefel bzw. schwefelhaltigen Synergisten als Flammschutzmittel in expandierbaren Polystyrolschaumstoffen. Auch hier sind die Gesamtbeladungen an Flammschutzmittel und Synergist im Allgemeinen größer als 9 Gew.-%.

WO 99/28372 offenbart ein Verfahren zur Herstellung von Biosorbentien durch Phosphorylierung cellulosehaltiger Materialien mit Phosphorsäure oder Ammoniumphosphat in Gegenwart von Harnstoff. Das Synthesegemisch wird vor Reaktionsbeginn mit elementarem Schwefel versetzt.

Bei hohen Beladungen an Flammschutzmittel und Synergist kann die Druckmechanik der erhaltenen Schaumstoffe nicht mehr ausreichend sein, da diese Additive z. T. stark weichmachende Eigenschaften haben. Hohe Beladungen von nicht in Polystyrol löslichen Komponenten (z. B. Salze) können darüber hinaus von Nachteil sein, da diese Komponenten z. T. stark nukleierend wirken, was sich u. a. negativ auf die Zellgrößen im Schaumkörper und damit auf die Wärmeleitfähigkeit des Schaumstoffs auswirken kann.

Die WO-A 2010/051163 beschreibt extrudierte Polystyrolschäume, die mit Estern aus Zuckern und bromierten Fettsäuren flammgeschützt ausgerüstet sind. Nachteilig ist hier vor allem, dass die beschriebene Flammschutzmischung nicht halogenfrei ist. Damit ist sie, ähnlich wie HBCD, aus ökotoxikologischen Gesichtspunkten potentiell bedenklich.

Die Verwendung einer intumeszenten (aufblähenden) feuerhemmenden Mischung zur Ausrüstung von Polystyrolschaumstoffen, enthaltend ein Reaktionsprodukt von Phosphorsäure mit einem reduzierenden Zucker, ist in der GB-A 2012294 beschrieben. Die flammhemmende Wirkung der Mischung wird hier durch eine Kombination von Phosphorsäure und Dextrose mit den blähenden Komponenten Monoammoniumphosphat, Oxalsäure, Harnstoff und Monoethanolamin erreicht. Nachteilig an diesem intumeszenten Flammschutzsystem für Polystyrolschäume ist, dass es als Beschichtung auf die geschäumten Polystyrolplatten aufgetragen werden muss und demgemäß zusätzliche aufwändige Verarbeitungsschritte erforderlich macht. Derart beschichtete Platten müssen dann in einem weiteren zusätzlichen Verarbeitungsschritt zu einem Probenkörper verpresst werden, der durch seinen Schichtaufbau nicht mehr den Standardspezifikationen (Mechanik, Isolationseigenschaften) von geschäumten Polystyrolkörpern entspricht.

Die WO-A 2011/083009 beschreibt u. a. die Verwendung von auf 1,4:3,6-Dianhydrohexitolen (z. B. Isosorbid) basierenden Phosphorverbindungen als Flammschutzmittel sowie Polystyrolpolymere, insbesondere Polystyrolschaumstoffe, welche diese Flammschutzmittel enthalten.

Im Stand der Technik offenbarte flammgeschützte Polymerzusammensetzungen weisen zufriedenstellende Flammschutzeigenschaften auf. Die beschriebenen teilweise relativ hohen Mengen an Flammschutzmittel und Synergist, welche bei thermoplastischen Polymeren wie Polystyrol eingesetzt werden, können jedoch bei Polymerschaumstoffen den Schäumprozess stören oder die mechanischen und thermischen Eigenschaften des Schaumstoffs negativ beeinflussen.

Gegenüber bekannten Flammschutzsystemen sowie diese enthaltende Polymerzusammensetzungen besteht noch ein breiter Raum für Verbesserungen, beispielsweise im Hinblick auf die Prozessierbarkeit, den Flammschutz oder die mechanischen und thermischen Eigenschaften.

Aufgabe der Erfindung ist es daher, weitere vorzugsweise halogenfreie Flammschutzsysteme sowie diese enthaltende Polymerzusammensetzungen bereitzustellen, mit denen zumindest in Teilbereichen Verbesserungen erzielt werden.

Gelöst wird die Aufgabe durch die Verwendung einer Mischung, enthaltend
a) mindestens eine Flammschutzkomponente i) aus der Gruppe phosphorylierte Di-, Oligo- und Polysaccharide mit einem Phosphorgehalt im Bereich von 0,5 bis 40 Gew.-%, bezogen auf das jeweilige phosphorylierte Di-, Oligo- oder Polysaccharid, und
b) mindestens eine Flammschutzkomponente ii) und/oder iii), wobei
   die Flammschutzkomponente ii) aus der Gruppe elementarer Schwefel und organische Schwefelverbindungen gewählt ist und der Schwefelgehalt einer jeweiligen organischen Schwefelverbindung im Bereich von 5 bis 80 Gew.-% liegt, und
   die Flammschutzkomponente iii) ein organisches Peroxid ist, als Flammschutzsystem.

Weiterhin Gegenstand der Erfindung ist eine Polymerzusammensetzung, enthaltend ein oder mehrere thermoplastische Polymere und diese Mischung.

Ein weiterer Gegenstand der Erfindung ist eine solche Polymerzusammensetzung, bevorzugt ein Polymerschaum, besonders bevorzugt ein Polymerschaum auf Basis eines Styrolpolymers, enthaltend 0,2 bis 10 Gew.-Teile der Mischung, bezogen auf 100 Gew.-Teile des Polymers.

Ein weiterer Gegenstand der Erfindung ist ein Flammschutzsystem gemäß Anspruch 13.

Gegenstand der Erfindung ist auch ein Verfahren zur Herstellung der erfindungsgemäßen Polymerzusammensetzung, wobei man eine Schmelze des Polymers oder die Monomere, aus denen das Polymer erzeugt wird, mit dem erfindungsgemäßen Flammschutzsystem vermischt.

Ebenso Gegenstand der Erfindung ist die Verwendung der erfindungsgemäßen Polymerzusammensetzung als Dämm- und/oder Isoliermaterial, insbesondere in der Bauindustrie.

Die erfindungsgemäßen Flammschutzsysteme sind halogenfrei, zeichnen sich durch gute Flammschutzeigenschaften aus und können in relativ geringen Mengen eingesetzt werden. Weiterhin vorteilhaft ist deren im Vergleich zu anderen Systemen geringer negativer Einfluss auf den Schäumprozess von Polymerschaumstoffen, was in einer guten Prozessierbarkeit resultiert. Die erfindungsgemäßen Polymerzusammensetzungen weisen gute mechanische und thermische Eigenschaften bei geringer Dichte auf. In diesem Zusammenhang sind Parameter wie die Druckspannung, die Wärmeformbeständigkeit, die Vicat-Erweichungstemperatur oder die Glasübergangstemperatur zu nennen. Ein weiterer Vorteil der erfindungsgemäßen Flammschutzsysteme ist, dass diese auf Zuckern und somit auf nachwachsenden Rohstoffen basieren. Beispielsweise wird Saccharose vor allem aus Zuckerrohr oder Zuckerrüben, Cellulose hauptsächlich aus Holz gewonnen.

Das erfindungsgemäße Flammschutzsystem enthält eine oder mehrere, vorzugsweise eine bis drei, besonders bevorzugt eine Flammschutzkomponente i).

Die mindestens eine Flammschutzkomponente i) ist ausgewählt aus der Gruppe phosphorylierte Di-, Oligo- und Polysaccharide.

"Phosphoryliertes Di-, Oligo- oder Polysaccharid" bedeutet im Rahmen dieser Anmeldung, dass mindestens ein H-Atom von in dem Di-, Oligo- oder Polysaccharid enthaltenen Hydroxylgruppen durch eine mindestens ein P-Atom enthaltende Gruppe substituiert ist, wobei ein P-Atom der mindestens ein P-Atom enthaltenden Gruppe an das O-Atom der Hydroxylgruppe gebunden ist.

In einer bevorzugten Ausführungsform enthält das phosphorylierte Di-, Oligo- oder Polysaccharid in der Komponente i) mindestens eine Gruppe der Formel (I), wobei die Symbole und Indizes folgende Bedeutungen haben: 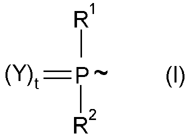
- ∼: ist die Bindung an das O-Atom einer in dem Di-, Oligo- oder Polysaccharid enthaltenen Hydroxylgruppe;
- Y: ist O oder S;
- t: ist 0 oder 1;
- R¹, R²: sind gleich oder verschieden H, lineares oder verzweigtes C₁-C₁₈-Alkyl, lineares oder verzweigtes C₂-C₁₈-Alkenyl, lineares oder verzweigtes C₂-C₁₈-Alkinyl, C₃-C₁₀-Cycloalkyl, C₆-C₁₀-Aryl, Heteroaryl, C₆-C1₀-Aryl-C₁-C₁₀-Alkyl, OR³, SR³, NR³R⁴, COR³, COOR³, CONR³R⁴, oder R¹ und R² bilden zusammen mit dem P-Atom, an das sie gebunden sind, ein 4 bis 8-gliedriges Ringsystem;
- R³, R⁴: sind gleich oder verschieden H, lineares oder verzweigtes C₁C₁₆-Alkyl, lineares oder verzweigtes C₂-C₁₆-Alkenyl, lineares oder verzweigtes C₂-C₁₆-Alkinyl, C₃-C₁₀-Cycloalkyl, C₆-C₁₀-Aryl, Heteroaryl oder C₆-C₁₀-Aryl-C₁-C₁₀-Alkyl;
wobei Aryl in den Resten R¹, R², R³, R⁴ jeweils unabhängig voneinander unsubstituiert oder mit 1 bis 3 Resten aus der Gruppe C₁₋C₁₀-Alkyl, C₁C₁₀-Alkoxy, C₆-C₁₀-Aryl, C₆-C₁₀-Aryloxy, OH, CHO, COOH, CN, SH, SCH₃, SO₂CH₃, SO₂-C₆-C₁₀-Aryl, SO₃H, COCH₃, COC₂H₅, CO-C₆-C₁₀-Aryl und S-S-C₆-C₁₀-Aryl substituiert ist.

Bevorzugt haben die Symbole und Indizes in der Formel (I) folgende Bedeutungen:
- Y: ist bevorzugt O oder S.
- t: ist bevorzugt 0 oder 1.
- R¹, R²: sind bevorzugt gleich oder verschieden lineares oder verzweigtes C₁-C₁₈-Alkyl, C₃-C₁₀-Cycloalkyl, C₆-C₁₀-Aryl, C₆-C₁₀-Aryl-C₁-C₅-Alkyl, OR³, SR³, NR³R⁴, oder R¹ und R² bilden zusammen mit dem P-Atom, an das sie gebunden sind, ein 4 bis 8-gliedriges Ringsystem.
- R³, R⁴: sind bevorzugt gleich oder verschieden H, lineares oder verzweigtes C₁-C₁₆-Alkyl, C₃-C₁₀-Cycloalkyl oder C₆-C₁₀-Aryl.

Aryl in den Resten R¹, R², R³, R⁴ ist bevorzugt jeweils unabhängig voneinander unsubstituiert oder mit 1 bis 2 Resten aus der Gruppe C₁-C₅-Alkyl substituiert.

Besonders bevorzugt sind phosphorylierte Di-, Oligo- oder Polysaccharide, enthaltend mindestens eine Gruppe der Formel (I), in der alle Symbole und Indizes die bevorzugten Bedeutungen haben.

Besonders bevorzugt haben die Symbole und Indizes in der Formel (I) folgende Bedeutungen:
- Y: ist besonders bevorzugt O.
- t: ist besonders bevorzugt 1.
- R¹, R²: sind besonders bevorzugt gleich oder verschieden lineares oder verzweigtes C₁-C₅-Alkyl, C₃-C₆-Cycloalkyl, C₆-C₁₀-Aryl, OR³, SR³, oder R¹ und R² bilden zusammen mit dem P-Atom, an das sie gebunden sind, ein 4 bis 8-gliedriges Ringsystem.
- R³: ist besonders bevorzugt H, lineares oder verzweigtes C₁-C₅-Alkyl oder C₆-C₁₀-Aryl.

Aryl in den Resten R¹, R², R³ ist besonders bevorzugt jeweils unabhängig voneinander unsubstituiert oder mit 1 bis 2 Resten aus der Gruppe C₁-C₅-Alkyl substituiert.

Ganz besonders bevorzugt sind phosphorylierte Di-, Oligo- oder Polysaccharide, enthaltend mindestens eine Gruppe der Formel (I), in der alle Symbole und Indizes die besonders bevorzugten Bedeutungen haben.

Ganz besonders bevorzugt haben die Symbole und Indizes in der Formel (I) folgende Bedeutungen:
- Y: ist ganz besonders bevorzugt O.
- t: ist ganz besonders bevorzugt 1.
- R¹, R²: sind ganz besonders bevorzugt gleich oder verschieden Phenyl, Tolyl, Naphthyl, oder OR³.
- R³: ist ganz besonders bevorzugt H, lineares oder verzweigtes C₁-C₅-Alkyl, Phenyl, Tolyl oder Naphthyl.

Insbesondere bevorzugt sind phosphorylierte Di-, Oligo- oder Polysaccharide, enthaltend mindestens eine Gruppe der Formel (I), in der alle Symbole und Indizes die ganz besonders bevorzugten Bedeutungen haben.

Enthält das phosphorylierte Di-, Oligo- oder Polysaccharid mehrere Gruppen der Formel (I), so sind die mehreren Gruppen der Formel (I) gleich oder verschieden. Bevorzugt sind die mehreren Gruppen der Formel (I) gleich.

In der Formel (I) umfasst der Begriff "Heteroaryl" einen 5-10-, vorzugsweise 5-6-gliedrigen aromatischen Ring, der ein oder mehrere, vorzugsweise ein bis drei Heteroatome aus der Gruppe N, O und S enthält. Beispiele für geeignete Heteroaryle sind Furyl, Thienyl, Pyridyl, Pyridazyl, Imidazolyl oder Triazyl. Bevorzugt sind Furyl, Thienyl und Pyridyl. Besonders bevorzugt ist Furyl.

Der Begriff Disaccharid (Zweifachzucker) ist dem Fachmann bekannt. Im Rahmen der Erfindung versteht man unter einem Oligosaccharid (Mehrfachzucker) einen Drei- bis Achtfachzucker und unter einem Polysaccharid (Vielfachzucker) einen Neunfach- sowie höhere Zucker. Insbesondere umfasst der Begriff Polysaccharid einen n-fach-Zucker, wobei n im Bereich von 9 bis 100000, vorzugsweise 9 bis 1000, besonders bevorzugt 9 bis 100 liegt.

Erfindungsgemäß handelt es sich bei den Sacchariden um natürliche oder synthetische Saccharide. Beispiele für synthetische Saccharide sind reduzierte, hydrogenierte, deoxygenierte oder dehydratisierte Saccharide.

Gemäß der Erfindung umfasst der Begriff Saccharid auch derivatisierte Saccharide.

Beispiele für derivatisierte Saccharide sind Saccharide, die mindestens eine mit einer Acetyl-, Alkyl- oder Benzylgruppe substituierte Hydroxylgruppe enthalten, Saccharide, bei denen mindestens eine der darin enthaltenen Hydroxylgruppen durch eine Amino- oder Acetylaminogruppe substituiert ist, Saccharide, bei denen mindestens eine der darin enthaltenen CH₂OH-Gruppen durch eine COOH-Gruppe oder deren Salze substituiert ist, oder Saccharide, die mindestens eine mit einer Polyethergruppe substituierte Hydroxylgruppe enthalten.

Die in den Sacchariden enthaltenen Hydroxylgruppen können beispielsweise unabhängig voneinander mit einer Acetyl-, Alkyl- oder Benzylgruppe substituiert sein oder durch eine Amino- oder Acetylaminogruppe substituiert sein.

Die in den Sacchariden gegebenenfalls enthaltenen CH₂OH-Gruppen können beispielsweise auch durch eine COOH-Gruppe oder deren Salze substituiert sein, was üblicherweise durch Oxidation der primären Hydroxylgruppen zu den entsprechenden Carbonsäuren und gegebenenfalls Salzbildung erzielt werden kann.

Gemäß einer Ausführungsform der Erfindung ist mindestens eine der in dem phosphorylierten Di-, Oligo- oder Polysaccharid enthaltenen Hydroxylgruppen mit einer Polyethergruppe substituiert.

Bevorzugt ist eine Polyethergruppe -(R^{X}-O-)ₙ-R^{Y}, bei der R^{X} eine lineare oder verzweigte C₁-C₆-Alkylengruppe und R^{Y} eine lineare oder verzweigte C₁-C₆-Alkylgruppe ist, wobei n im Bereich von 1 bis 100 liegt.

Besonders bevorzugt ist eine Polyethergruppe -(R^{X}-O-)ₙ-R^{Y}, bei der R^{X} eine lineare oder verzweigte C₂-C₄-Alkylengruppe, insbesondere C₂-C₃-Alkylengruppe, und R^{Y} eine lineare oder verzweigte C₂-C₄-Alkylgruppe ist, wobei n im Bereich von 1 bis 15 liegt.

Di-, Oligo- oder Polysaccharide, die mindestens eine mit einer Polyethergruppe substituierte Hydroxylgruppe enthalten, können beispielsweise durch Umsetzung von Di-, Oligo- oder Polysacchariden mit Oxacycloalkanen wie Ethylenoxid, Propylenoxid, Trimethylenoxid oder Tetrahydrofuran gegebenenfalls in Gegenwart eines Katalysators wie NaOH, KOH oder Zinkcyanocobaltate erhalten werden.

Innerhalb der Gruppe der Di-, Oligo- und Polysaccharide sind Disaccharide oder Polysaccharide bevorzugt, und Disaccharide besonders bevorzugt.

Beispiele für geeignete Disaccharide sind Saccharose, Sucrose, Maltose, Maltulose, Lactose, Cellobiose, Isomaltose, Isomaltulose, Chitobiose, Nigerose, Trehalose oder Melibiose. Bevorzugt sind Saccharose, Maltose oder Lactose. Besonders bevorzugt ist Saccharose.

Beispiele für geeignete Oligo- oder Polysaccharide sind Raffinose, Cellotriose, Chitotriose, Maltotriose, Cellotetraose, Chitotetraose, Maltotetraose, Cellopentaose, Chitopentaose, Maltopentaose, Cellohexaose, Chotohexaose, Maltohexaose, Cellulose, Stärke, Amylopektin, Amylose, Dextrin, Cyclodextrin, Glykogen, Chitin, Galactan, Chitosan, Mannan oder Pullulan. Bevorzugt ist Cellulose.

In einer bevorzugten Ausführungsform sind die Di-, Oligo- oder Polysaccharide teilweise phosphoryliert. "Teilweise phosphoryliertes Di-, Oligo- oder Polysaccharid" bedeutet im Rahmen dieser Anmeldung, dass 10 bis 95%, vorzugsweise 50 bis 95%, besonders bevorzugt 70 bis 95% der in dem Di-, Oligo- oder Polysaccharid enthaltenen Hydroxylgruppen phosphoryliert sind.

In einer weiteren bevorzugten Ausführungsform sind die Di-, Oligo- oder Polysaccharide vollständig phosphoryliert. "Vollständig phosphoryliertes Di-, Oligo- oder Polysaccharid" bedeutet im Rahmen der vorliegenden Anmeldung, dass >95%, vorzugsweise >98%, besonders bevorzugt >99% der in dem Di-, Oligo- oder Polysaccharid enthaltenen Hydroxylgruppen phosphoryliert sind.

Besonders bevorzugt, insbesondere für die Anwendung in Polystyrolschaumstoffen, sind vollständig phosphorylierte Di-, Oligo- oder Polysaccharide.

Der Phosphorgehalt des phosphorylierten Di-, Oligo- oder Polysaccharids liegt im Bereich von 0,5 bis 40 Gew.-%, vorzugsweise 2 bis 25 Gew.-%, besonders bevorzugt 5 bis 15 Gew.-%, bezogen auf das phosphorylierte Di-, Oligo- oder Polysaccharid.

Das erfindungsgemäße Flammschutzsystem enthält eine oder mehrere, vorzugsweise eine bis drei, besonders bevorzugt eine Flammschutzkomponente ii) und/oder eine oder mehrere, vorzugsweise eine bis drei, besonders bevorzugt eine Flammschutzkomponente iii).

In einer Ausführungsform enthält das erfindungsgemäße Flammschutzsystem eine (1) Flammschutzkomponente ii) und eine (1) Flammschutzkomponente iii).

In einer Ausführungsform enthält das erfindungsgemäße Flammschutzsystem mindestens eine Flammschutzkomponente ii) und keine Flammschutzkomponente iii).

In einer besonderen Ausführungsform enthält das erfindungsgemäße Flammschutzsystem eine (1) Flammschutzkomponente ii) und keine Flammschutzkomponente iii).

In einer weiteren Ausführungsform enthält das erfindungsgemäße Flammschutzsystem mindestens eine Flammschutzkomponente iii) und keine Flammschutzkomponente ii).

In einer weiteren besonderen Ausführungsform enthält das erfindungsgemäße Flammschutzsystem eine (1) Flammschutzkomponente iii) und keine Flammschutzkomponente ii).

Die Flammschutzkomponente ii) ist ausgewählt aus der Gruppe elementarer Schwefel und organische Schwefelverbindungen.

Beispielsweise kann der elementare Schwefel an sich verwendet werden.

Der elementare Schwefel kann auch in Form von Ausgangsverbindungen eingesetzt werden, die unter den Verfahrensbedingungen zu elementarem Schwefel zersetzt werden.

Weiterhin ist es möglich, den elementaren Schwefel in verkapselter Form einzusetzen. Als Materialien zum Verkapseln eignen sich zum Beispiel Melaminharze (analog US-A 4,440,880) und Harnstoff-Formaldehyd-Harze (analog US-A 4,698,215). Weitere Materialien und Literaturzitate finden sich in WO 99/10429.

Als organische Schwefelverbindungen eignen sich beispielsweise Monosulfide, Disulfide, oligomere Disulfide, polymere Disulfide, Oligo- oder Polysulfide. Bevorzugt sind Disulfide, oligomere Disulfide und polymere Disulfide. Besonders bevorzugt sind Disulfide und polymere Disulfide.

Geeignet sind zum Beispiel auch organische Schwefelverbindungen der Formel (II), 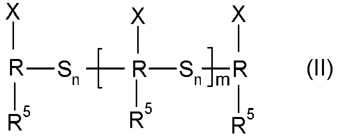 wobei die Symbole und Indizes folgende Bedeutungen haben:
- R: ist gleich oder verschieden, vorzugsweise gleich, C₆-C₁₂-Aryl, eine 5-10-gliedrige Heteroarylgruppe, die ein oder mehrere Heteroatome aus der Gruppe N, O und S enthält, C₁-C₁₈-Alkyl, C₂-C₁₈-Alkenyl, C₃-C₁₈-Alkinyl, C₃-C₁₀-Cycloalkyl oder C₆-C₁₂-Aryl-C₁-C₁₈-Alkyl;
- X: ist gleich oder verschieden, vorzugsweise gleich, OR⁶, SR⁶, NR⁶R⁷, COOR⁶, CONR⁶, SO₂R⁶, F, Cl, Br, R, H, oder eine Gruppe -Y¹-P(Y²)ₚR'R";
- Y¹: ist O, S oder NR'";
- Y²: ist O oder S;
- p: ist 0 oder 1;
- R', R": sind gleich oder verschieden, vorzugsweise gleich, C₁-C₁₈-Alkyl, C₂-C₁₈-Alkenyl, C₂-C₁₈-Alkinyl, C₆-C₁₂-Aryl, C₃-C₁₀-Cycloalkyl, C₆-C₁₂-Aryl-C₁-C₁₈-Alkyl, eine Heteroarylgruppe oder Heteroaryloxygruppe, die ein oder mehrere Heteroatome aus der Gruppe N, O und S enthält, O-(C₁C₁₈)-Alkyl, O-(C₂-C₁₈)-Alkenyl, O-(C₂-C₁₀)-Alkinyl, O-(C₆-C₁₂)-Aryl, O-(C₃-C₁₀)-Cycloalkyl oder (C₆-C₁₂)-Aryl-(C₁-C₁₈)-Alkyl-O;
- R'": ist H, C₁-C₁₈-Alkyl oder (P(Y²)ₚR'R");
- R⁵: ist gleich oder verschieden, vorzugsweise gleich, C₁-C₁₈-Alkyl, C₂-C₁₈-Alkenyl, C₂-C₁₈-Alkinyl, C₆-C₁₂-Aryl, C₃-C₁₀-Cycloalkyl, C₆-C₁₂-Aryl-C₁-C₁₈-Alkyl, eine Heteroarylgruppe, die ein oder mehrere Heteroatome aus der Gruppe N, O und S enthält, O-(C₁C₁₈)-Alkyl, O-(C₂-C₁₈)-Alkenyl, O-(C₃-C₁₈)-Alkinyl, O-(C₆-C₁₂)-Aryl, O-(C₃-C₁₀)-Cycloalkyl, (C₆-C₁₂)-Aryl-(C₁-C₁₈)-Alkyl-O, S-(C₁-C₁₈)-Alkyl, S-(C₁-C₁₈)-Alkenyl, S-(C₂-C₁₈)-Alkinyl, S-(C₆-C₁₂)-Aryl, S-(C₃-C₁₀)-Cycloalkyl, (C₆-C₁₂)-Aryl-(C₁-C₁₈)-Alkyl-S, OH, F, Cl, Br oder H;
- R⁶, R⁷: sind gleich oder verschieden, vorzugsweise gleich, H, C₁-C₁₈-Alkyl, C₂-C₁₈-Alkenyl, C₂-C₁₈-Alkinyl, C₆-C₁₂-Aryl, C₃-C₁₀-Cycloalkyl, C₆-C₁₂-Aryl-C₁-C₁₈-Alkyl oder eine Heteroarylgruppe, die ein oder mehrere Heteroatome aus der Gruppe N, O und S enthält;
- n: ist eine ganze Zahl von 1 bis 8;
- m: ist eine Zahl von 0 bis 1000.

In einer bevorzugten Ausführungsform (II-A) haben die Symbole und Indizes in der Formel (II) folgende Bedeutungen:
- R: ist C₆-C₁₂-Aryl, eine 5-10-gliedrige Heteroarylgruppe, die ein bis drei Hetero-atome aus der Gruppe N, O und S enthält, oder C₆-C₁₂-Aryl-C₁-C₁₈-Alkyl;
- X: ist OR⁶, SR⁶, NR⁶R⁷, COOR⁶, CONR⁶, SO₂R⁶, F, Cl, Br oder H;
- R⁵: ist C₁-C₁₈-Alkyl, C₂-C₁₈-Alkenyl, C₃-C₁₈-Alkinyl, C₃-C₁₀-Cycloalkyl, O-(C₁-C₁₈)-Alkyl, O-(C₂-C₁₈)-Alkenyl, O-(C₃-C₁₈)-Alkinyl, O-(C₃-C₁₀)-Cycloalkyl, OH, F, Cl, Br oder H;
- R⁶, R⁷: sind gleich oder verschieden H, C₁-C₁₈-Alkyl, C₂-C₁₈-Alkenyl, C₃-C₁₈-Alkinyl, C₃-C₁₀-Cycloalkyl, C₆-C₁₀-Aryl oder Cr₆-C₁₀-Aryl-C₁-C₁₈-Alkyl;
- n: ist 2 und
- m: ist 0.

Besonders bevorzugt in der Ausführungsform II-A haben die Symbole und Indizes in der Formel (II) folgende Bedeutungen:
- R: ist besonders bevorzugt C₆-C₁₀-Aryl, eine 5-10-gliedrige Heteroarylgruppe, die ein bis drei Heteroatome aus der Gruppe N, O und S enthält, oder C₆-C₁₀-Aryl-C₁-C₆-Alkyl.
- X: ist besonders bevorzugt OR⁶, SR⁶, NR⁶R⁷, COOR⁶, CONR⁶, SO₂R⁶ oder H.
- R⁵: ist besonders bevorzugt C₁-C₆-Alkyl oder H.
- R⁶, R⁷: sind besonders bevorzugt gleich oder verschieden H, C₁-C₆-Alkyl, C₆-C₁₀-Aryl oder C₆-C₁₀-Aryl-C₁-C₆-Alkyl.
- n: ist besonders bevorzugt 2.
- m: ist besonders bevorzugt 0.

Besonders bevorzugt sind organische Schwefelverbindungen II-A, in denen alle Symbole und Indizes die besonders bevorzugten Bedeutungen haben.

Ganz besonders bevorzugt in der Ausführungsform II-A haben die Symbole und Indizes in der Formel (II) folgende Bedeutungen:
- R: ist ganz besonders bevorzugt C₆-Aryl, eine 5-10-gliedrige Heteroarylgruppe, die ein bis drei Heteroatome aus der Gruppe N, O und S enthält, oder C₆-Aryl-C₁-Alkyl.
- X: ist ganz besonders bevorzugt OR⁶, NR⁶R⁷ oder H.
- R⁵: ist ganz besonders bevorzugt C₁-C₄-Alkyl oder H.
- R⁶, R⁷: sind ganz besonders bevorzugt gleich oder verschieden H, C₁-C₄-Alkyl, C₆-Aryl oder C₆-Aryl-C₁-Alkyl.
- n: ist ganz besonders bevorzugt 2.
- m: ist ganz besonders bevorzugt 0.

Ganz besonders bevorzugt sind organische Schwefelverbindungen II-A, in denen alle Symbole und Indizes die ganz besonders bevorzugten Bedeutungen haben.

Insbesondere bevorzugt sind die in den Beispielen aufgeführten organischen Schwefelverbindungen ll-A.

In einer weiteren bevorzugten Ausführungsform (II-B) haben die Symbole und Indizes in der Formel (II) folgende Bedeutungen:
- R: ist C₆-C₁₂-Aryl oder eine 5-10-gliedrige Heteroarylgruppe, die ein bis drei Heteroatome aus der Gruppe N, O und S enthält;
- X: ist OR⁶, SR⁶, NR⁶R⁷, COOR⁶, CONR⁶R⁷, SO₂R⁶, F, Cl, Br, H oder eine Gruppe Y¹-P(Y²)ₚR'R";
- Y¹: ist O oder S;
- Y²: ist O oder S;
- p: ist 0 oder 1;
- R', R": sind gleich oder verschieden C₁-C₁₈-Alkyl, C₂-C₁₈-Alkenyl, C₂-C₂₈-Alkinyl, C₃-C₁₀-Cycloalkyl, C₆-C₁₂-Aryl, C₆-C₁₂-Aryl-C₁-C₁₈-Alkyl, O-(C₁-C₁₈)-Alkyl, O-(C₃-C₁₀)-Cycloalkyl, O-(C₆-C₁₂)-Aryl, (C₆-C₁₂)-Aryl-(C₁-C₁₈)-Alkyl-O;
- R⁵: ist C₁-C₁₈-Alkyl, C₂-C₁₈-Alkenyl, C₃-C₁₈-Alkinyl, C₃-C₁₀-Cycloalkyl, O-(C₁-C₁₈)-Alkyl, O-(C₂-C₁₈)-Alkenyl, O-(C₃-C₁₈)-Alkinyl oder O-(C₃-C₁₀)-Cycloalkyl;
- R⁶, R⁷: sind gleich oder verschieden H, C₁-C₁₈-Alkyl, C₂-C₁₈-Alkenyl, C₃-C₁₈-Alkinyl, C₃-C₁₀-Cycloalkyl, C₆-C₁₀-Aryl oder C₆-C₁₀-Aryl-C₁-C₁₈-Alkyl;
- n: ist eine ganze Zahl von 2 bis 6 und
- m: ist eine Zahl von 2 bis 500.

Besonders bevorzugt in der Ausführungsform II-B haben die Symbole und Indizes in der Formel (II) folgende Bedeutungen:
- R: ist besonders bevorzugt C₆-C₁₀-Aryl.
- X: ist besonders bevorzugt OR⁶, SR⁶, NR⁶R⁷, COOR⁶, COONR⁶R⁷, SO₂R⁶ oder eine Gruppe Y¹-P(Y²)ₚR'R".
- Y¹: ist besonders bevorzugt O oder S.
- Y²: ist besonders bevorzugt O oder S.
- p: ist besonders bevorzugt 0 oder 1.
- R', R": sind besonders bevorzugt gleich und sind C₁-C₁₈-Alkyl, C₆-C₁₂-Aryl, O-(C₁-C₁₈)-Alkyl oder O-(C₆-C₁₂-Aryl.
- R⁵: ist besonders bevorzugt C₁-C₁₆-Alkyl.
- R⁶, R⁷: sind besonders bevorzugt gleich und sind H, C₁-C₁₈-Alkyl oder C₆-C₁₂-Aryl.
- n: ist besonders bevorzugt eine ganze Zahl von 2 bis 4.
- m: ist besonders bevorzugt eine Zahl von 2 bis 250.

Besonders bevorzugt sind weiterhin organische Schwefelverbindungen II-B, in denen alle Symbole und Indizes die weiteren besonders bevorzugten Bedeutungen haben.

Ganz besonders bevorzugt in der Ausführungsform II-B haben die Symbole und Indizes in der Formel (II) folgende Bedeutungen:
- R: ist ganz besonders bevorzugt Phenyl.
- X: ist ganz besonders bevorzugt OR⁶ oder eine Gruppe O-P(O)ₚR'R".
- p: ist ganz besonders bevorzugt 0 oder 1.
- R', R": sind ganz besonders bevorzugt gleich und sind C₁-C₆-Alkyl, C₆-C₁₂-Aryl, O-(C₁-C₆)-Alkyl oder O-(C₆-C₁₂)-Aryl.
- R⁵: ist ganz besonders bevorzugt C₁C₁₀-Alkyl.
- R⁶: ist ganz besonders bevorzugt H oder C₁-C₆-Alkyl.
- n: ist ganz besonders bevorzugt eine ganze Zahl von 2 bis 3.
- m: ist ganz besonders bevorzugt eine Zahl von 3 bis 150.

Ganz besonders bevorzugt sind weiterhin organische Schwefelverbindungen II-B, in denen alle Symbole und Indizes die weiteren ganz besonders bevorzugten Bedeutungen haben.

Insbesondere bevorzugt sind weiterhin die in den Beispielen aufgeführten organischen Schwefelverbindungen II-B.

Der Schwefelgehalt der organischen Schwefelverbindung liegt im Bereich von 5 bis 80 Gew.-%, vorzugsweise 15 bis 60 Gew.-%, besonders bevorzugt 15 bis 40 Gew.-%, bezogen auf die organische Schwefelverbindung.

Die Flammschutzkomponente iii) ist ein organisches Peroxid.

Geeignete organische Peroxide sind zum Beispiel Dicumylperoxid, Di-*tert*-butylperoxid, Benzoylperoxid, *tert*-Butylperoxy-2-ethylhexylcarbonat, Cumylhydroperoxid, Isopropylcumylhydroperoxid, 1,1,3,3-Tetramethylbutylhydroperoxid, 1,3-Bis-(*tert*-butylperoxyiso-propyl)benzol, 1,4-Bis-(*tert*-butylperoxyisopropyl)benzol, 2,5-Dimethyl-2,5-di-(*tert*-butyl-peroxy)hexin-3 oder 3,6,9-Triethyl-3,6,9-trimethyl-1,4,7-triperoxonan.

Bevorzugt sind Dicumylperoxid, Di-*tert*-butylperoxid, 2,5-Dimethyl-2,5-di-(*tert-*butyl-peroxy)hexin-3, Cumylhydroperoxid, 1,3-Bis-(*tert*-butylperoxyisopropyl)benzol und 1,4-Bis-(*tert*-butylperoxyisopropyl) benzol.

Insbesondere bevorzugt sind Dicumylperoxid, Di-*tert*-butylperoxid und 2,5-Dimethyl-2,5-di-(*tert*-butylperoxy)hexin-3.

Das Gewichtsverhältnis der Flammschutzkomponenten i) und ii) beträgt 1:10 bis 10:1, vorzugsweise 1:5 bis 5:1, besonders bevorzugt 1:5 bis 1:1.

Das Gewichtsverhältnis der Flammschutzkomponenten i) und iii) beträgt 1:10 bis 10:1, vorzugsweise 1:5 bis 5:1, besonders bevorzugt 1:3 bis 3:1.

Enthält das erfindungsgemäße Flammschutzsystem eine oder mehrere Flammschutzkomponenten ii) und eine oder mehrere Flammschutzkomponenten iii), so beträgt das Gewichtsverhältnis der Flammschutzkomponenten ii) und iii) 1:5 bis 5:1, vorzugsweise 1:3 bis 3:1, besonders bevorzugt 1:1 bis 3:1.

Wie in den Beispielen beschrieben, können die eingesetzten Flammschutzkomponenten i), ii) und iii) kommerziell bezogen oder in Anlehnung an in literaturbekannte Methoden synthetisiert werden.

Das erfindungsgemäße Flammschutzsystem wird in der Regel zum Schutz von Polymeren, insbesondere Polymerschäumen, und dabei vorzugsweise in einer Menge im Bereich von 0,2 bis 20 Gew.-Teilen, bezogen auf das Polymer, eingesetzt. Mengen von 0,5 bis 15 Gew.-Teilen, bezogen auf das Polymer, bevorzugt 0,75 bis 10 Gew.-Teilen, bezogen auf das Polymer, besonders bevorzugt 1 bis 5 Gew.-Teilen, bezogen auf das Polymer, gewährleisten insbesondere bei Schaumstoffen aus expandierbaren Styrolpolymeren einen ausreichenden Flammschutz.

In einer Ausführungsform wird das erfindungsgemäße Flammschutzsystem in einer Menge im Bereich von 0,2 bis 10 Gew.-Teilen, bezogen auf das Polymer, eingesetzt.

Die Angabe von Gewichtsteilen bezieht sich dabei im Rahmen dieser Anmeldung - soweit nicht anders angegeben - stets auf 100 Gew.-Teile der Verbindung, insbesondere des Polymers, die/das flammhemmend ausgerüstet wird, ohne Berücksichtigung von etwaigen Additiven.

Zusätzlich können weitere Flammschutzmittel, wie Melamin, Melamincyanurate, Metalloxide, Metallhydroxide, Phosphate, Phosphonate, DOPO (9,10-Dihydro-9-oxa-10-phosphaphenanthren-10-oxid) oder DOPO-Derivate, Phosphinate, Phosphite, Phosphinite, Blähgraphit oder Synergisten, wie Sb₂O₃, Sn-Verbindungen oder Nitroxyl-Radikale enthaltende oder freisetzende Verbindungen, eingesetzt werden. Geeignete zusätzliche halogenfreie Flammschutzmittel sind beispielsweise im Handel unter den Bezeichnungen Exolit® OP 930, Exolit® OP 1312, HCA®, HCA-HQ®, Cyagard® RF-1243, Fyrol® PMP, Phoslite® IP-A, Melapur® 200, Melapur® MC oder Budit® 833 erhältlich.

Falls auf vollständige Halogenfreiheit verzichtet werden kann, können halogenreduzierte Materialien durch Verwendung des erfindungsgemäßen Flammschutzsystems und den Zusatz geringerer Mengen an halogenhaltigen, insbesondere bromierten Flammschutzmitteln, wie Hexabromcyclododecan (HBCD) oder bromierten Styrolhomo-bzw. Styrolcopolymeren/-oligomeren (z.B. Styrol-Butadien-Copolymeren, wie in WO-A 2007/058736 beschrieben), bevorzugt in Mengen im Bereich von 0,05 bis 1, insbesondere 0,1 bis 0,5 Gew.-Teilen (bezogen auf das Polymer), hergestellt werden.

In einer bevorzugten Ausführungsform ist das erfindungsgemäße Flammschutzsystem halogenfrei.

Besonders bevorzugt ist die Zusammensetzung aus Polymer, Flammschutzsystem und weiteren Zusatzstoffen halogenfrei.

Bei dem erfindungsgemäß zu schützenden Material handelt es sich vorzugsweise um eine Polymerzusammensetzung, d. h. eine Zusammensetzung, die ein oder mehrere Polymere enthält und bevorzugt aus einem oder mehreren Polymeren besteht. Bevorzugt sind thermoplastische Polymere. Besonders bevorzugt ist die Polymerzusammensetzung ein Schaumstoff.

Die erfindungsgemäßen Flammschutzsysteme werden bevorzugt für die Herstellung flammhemmend ausgerüsteter (bzw. flammgeschützter) Polymere, insbesondere thermoplastischer Polymere, verwendet. Hierfür wird das Flammschutzsystem vorzugsweise physikalisch mit dem entsprechenden Polymer in der Schmelze vermischt und dann entweder als Polymermischung zunächst fertig konfektioniert und dann in einem zweiten Verfahrensschritt zusammen mit demselben oder mit einem anderen Polymer weiterverarbeitet. Alternativ ist im Falle von Styrolpolymeren auch der Zusatz des erfindungsgemäßen Flammschutzsystems vor, während und/oder nach der Herstellung durch Suspensionspolymerisation bevorzugt.

Gegenstand der Erfindung ist auch eine vorzugsweise thermoplastische Polymerzusammensetzung, enthaltend das erfindungsgemäße Flammschutzsystem.

Als Polymer können beispielsweise geschäumte oder ungeschäumte Styrolpolymere, einschließlich ABS-, ASA-, SAN-, AMSAN-, SB- und HIPS-Polymere, Polyimide, Polysulfone, Polyolefine wie Polyethylen und Polypropylen, Polyacrylate, Polyurethane, Polycarbonate, Polyphenylenoxide, ungesättigte Polyesterharze, Phenolharze, Aminoplaste, Epoxidharze, Polyamide, Polyethersulfone, Polyetherketone, Polyetheretherketone und Polyethersulfide, jeweils einzeln oder in Mischung als Polymerblends eingesetzt werden.

Bevorzugt sind thermoplastische Polymere wie geschäumte oder ungeschäumte Styrolhomopolymere und -copolymere jeweils einzeln oder in Mischung als Polymerblends.

Bevorzugt sind Polymerschaumstoffe, insbesondere auf Basis von Styrolpolymeren, vorzugsweise EPS und XPS.

Die Polymerschaumstoffe weisen (nach ISO 845) bevorzugt eine Dichte im Bereich von 5 bis 200 kg/m³, besonders bevorzugt im Bereich von 10 bis 50 kg/m³ auf und sind bevorzugt zu mehr als 80%, besonders bevorzugt zu 90 bis 100% geschlossenzellig.

Erfindungsgemäße expandierbare Styrolpolymere (EPS) und Styrolpolymerextrusionsschaumstoffe (XPS) können durch Zugabe des Treibmittels und des erfindungsgemäßen Flammschutzsystems vor, während oder nach der Suspensionspolymerisation oder durch Einmischen eines Treibmittels und des erfindungsgemäßen Flammschutzsystems in die Polymerschmelze und anschließende Extrusion und Granulierung unter Druck zu expandierbaren Granulaten (EPS) oder durch Extrusion und Entspannung unter Verwendung entsprechend geformter Düsen zu Schaumstoffplatten (XPS) oder Schaumstoffsträngen verarbeitet werden.

Erfindungsgemäß umfasst der Begriff Styrolpolymer Polymere auf Basis von Styrol, alpha-Methylstyrol oder Mischungen von Styrol und alpha-Methylstyrol; analog gilt dies für den Styrolanteil in SAN, AMSAN, ABS, ASA, MBS und MABS (siehe unten). Erfindungsgemäße Styrolpolymere basieren auf mindestens 50 Gew.-% Styrol und/oder alpha-Methylstyrol-Monom eren.

In einer bevorzugten Ausführungsform ist das Polymer ein expandierbares Polystyrol (EPS).

In einer weiteren bevorzugten Ausführungsform ist der Schaumstoff ein Styrolpolymerextrusionsschaumstoff (XPS).

Bevorzugt weisen expandierbare Styrolpolymere ein Molekulargewicht M_{w} im Bereich von 150.000 bis 700.000 g/mol, gemessen mittels Gelpermeationschromatographie mit refraktometrischer Detektion (RI) gegenüber Polystyrolstandards, auf. Aufgrund des Molekulargewichtsabbaus durch Scherung und/oder Temperatureinwirkung liegt das Molekulargewicht des expandierbaren Polystyrols in der Regel etwa 10.000 bis 40.000 g/mol unter dem Molekulargewicht des eingesetzten Polystyrols. Das zahlenmittlere Molekulargewicht Mₙ ist bevorzugt kleiner als 150.000 g/mol.

Bevorzugt werden als Styrolpolymere glasklares Polystyrol (GPPS), Schlagzähpolystyrol (HIPS), anionisch polymerisiertes Polystyrol oder Schlagzähpolystyrol (A-IPS), Styrol-alpha-Methylstyrol-Copolymere, Acrylnitril-Butadien-Styrolpolymerisate (ABS), Styrol-Butadien-Copolymere (SB), Styrol-Acrylnitril-Copolymere (SAN), Acrylnitrilalpha-Methylstyrol-Copolymere (AMSAN), Styrol-Maleinsäuranhydrid-Copolymere (SMA), Styrol-Methylmethacrylat-Copolymere (SMMA), Styrol-N-Phenylmaleinimid-Copolymere (SPMI), Acrylnitril-Styrol-Acrylester (ASA), Methylmethacrylat-Butadien-Styrol (MBS), Methylmethacrylat-Acrylnitril-Butadien-Styrol (MABS)-Polymerisate oder Mischungen davon oder mit Polyphenylenether (PPE) eingesetzt.

Die genannten Styrolpolymere können zur Verbesserung der mechanischen Eigenschaften oder der Temperaturbeständigkeit gegebenenfalls unter Verwendung von Verträglichkeitsvermittlern mit thermoplastischen Polymeren wie Polyamiden (PA), Polyolefinen wie Polypropylen (PP) oder Polyethylen (PE), Polyacrylaten wie Polymethylmethacrylat (PMMA), Polycarbonaten (PC), Polyestern wie Polyethylenterephthalat (PET) oder Polybutylenterephthalat (PBT), Polyethersulfonen (PES), Polyetherketonen oder Polyethersulfiden (PES) oder Mischungen davon in Anteilen von insgesamt bis maximal 30 Gew.-%, bevorzugt im Bereich von 1 bis 10 Gew.-%, bezogen auf die Polymerschmelze, abgemischt werden. Des Weiteren sind Mischungen in den genannten Mengenbereichen auch mit zum Beispiel hydrophob modifizierten oder funktionalisierten Polymeren oder Oligomeren, Kautschuken wie Polyacrylaten oder Polydienen, zum Beispiel Styrol-Butadien-Blockcopolymeren oder biologisch abbaubaren aliphatischen oder aliphatisch/aromatischen Copolyestern möglich.

Als Verträglichkeitsvermittler eignen sich zum Beispiel Maleinsäureanhydridmodifizierte Styrolcopolymere, epoxidgruppenhaltige Polymere oder Organosilane.

Der Styrolpolymerschmelze können auch Polymerrecyklate der genannten thermoplastischen Polymere, insbesondere Styrolpolymere und expandierbare Styrolpolymere (EPS) in Mengen zugemischt werden, die deren Eigenschaften nicht wesentlich verschlechtern, in der Regel in Mengen von maximal 50 Gew.-%, insbesondere in Mengen von 1 bis 20 Gew.-%, bezogen auf das Polymer.

Die treibmittelhaltige Styrolpolymerschmelze enthält in der Regel ein oder mehrere Treibmittel in homogener Verteilung in einem Anteil von insgesamt 2 bis 10 Gew.-%, bevorzugt 3 bis 7 Gew.-%, bezogen auf die treibmittelhaltige Styrolpolymerschmelze. Als Treibmittel eignen sich die üblicherweise in EPS eingesetzten physikalischen Treibmittel wie aliphatische Kohlenwasserstoffe mit 2 bis 7 Kohlenstoffatomen, Alkohole, Ketone, Ether oder halogenierte Kohlenwasserstoffe. Bevorzugt wird iso-Butan, n-Butan, iso-Pentan, n-Pentan eingesetzt. Für XPS wird bevorzugt CO₂ oder dessen Mischungen mit Alkoholen und/oder C₂-C₄-Carbonylverbindungen, insbesondere Ketonen, eingesetzt.

Zur Verbesserung der Verschäumbarkeit können feinverteilte Innenwassertröpfchen in die Styrolpolymermatrix eingebracht werden. Dies kann beispielsweise durch die Zugabe von Wasser in die aufgeschmolzene Styrolpolymermatrix erfolgen. Die Zugabe des Wassers kann örtlich vor, mit oder nach der Treibmitteldosierung erfolgen. Eine homogene Verteilung des Wassers kann mittels dynamischer oder statischer Mischer erreicht werden. In der Regel sind 0 bis 2, bevorzugt 0,05 bis 1,5 Gew.-% Wasser, bezogen auf das Styrolpolymer, ausreichend.

Expandierbare Styrolpolymere (EPS) mit mindestens 90% des Innenwassers in Form von Innenwassertröpfchen mit einem Durchmesser im Bereich von 0,5 bis 15 µm bilden beim Verschäumen Schaumstoffe mit ausreichender Zellzahl und homogener Schaumstruktur.

Die zugesetzte Treibmittel- und Wassermenge wird so gewählt, dass die expandierbaren Styrolpolymere (EPS) ein Expansionsvermögen a, definiert als Schüttdichte vor dem Verschäumen/Schüttdichte nach dem Verschäumen, höchstens 125, bevorzugt 15 bis 100 aufweisen.

Die erfindungsgemäßen expandierbaren Styrolpolymergranulate (EPS) weisen in der Regel eine Schüttdichte von höchstens 700 g/l, bevorzugt im Bereich von 590 bis 660 g/l auf. Bei Verwendung von Füllstoffen können in Abhängigkeit von der Art und Menge des Füllstoffs Schüttdichten im Bereich von 590 bis 1200 g/l auftreten.

Des Weiteren können der Styrolpolymerschmelze Additive, zum Beispiel Keimbildner, Füllstoffe, Weichmacher, lösliche und unlösliche anorganische und/oder organische Farbstoffe und Pigmente, IR-Absorber wie Ruß, Graphit oder Aluminiumpulver sowie weitere athermane Materialien gemeinsam oder räumlich getrennt, zum Beispiel über Mischer oder Seitenextruder zugegeben werden. In der Regel werden die Farbstoffe und Pigmente in Mengen im Bereich von 0,01 bis 30, bevorzugt im Bereich von 1 bis 8 Gew.-%, bezogen auf das Polymer, zugesetzt. Zur homogenen und mikrodispersen Verteilung der Pigmente in dem Styrolpolymer kann es insbesondere bei polaren Pigmenten zweckmäßig sein, ein Dispergierhilfsmittel, zum Beispiel Organosilane, Epoxygruppen-haltige Polymere oder Maleinsäureanhydrid-gepfropfte Styrolpolymere einzusetzen. Bevorzugte Weichmacher sind Mineralöle, Phthalate, die in Mengen von 0,05 bis 10 Gew.-%, bezogen auf das Styrolpolymerisat, eingesetzt werden können. Analog können diese Stoffe auch vor, während oder nach der Suspensionspolymerisation zu erfindungsgemäßem EPS zugegeben werden.

Zur Herstellung der erfindungsgemäßen expandierbaren Styrolpolymerisate nach dem Granulierverfahren kann das Treibmittel in die Polymerschmelze eingemischt werden. Ein mögliches Verfahren umfasst die Stufen a) Schmelzerzeugung, b) Mischen, c) Kühlen, d) Fördern und e) Granulieren. Jede dieser Stufen kann durch die in der Kunststoffverarbeitung bekannten Apparate oder Apparatekombinationen ausgeführt werden. Zur Einmischung eignen sich statische oder dynamische Mischer, beispielsweise Extruder. Die Polymerschmelze kann direkt aus einem Polymerisationsreaktor entnommen werden oder direkt in dem Mischextruder oder einem separaten Aufschmelzextruder durch Aufschmelzen von Polymergranulaten erzeugt werden. Die Kühlung der Schmelze kann in den Mischaggregaten oder in separaten Kühlern erfogen. Für die Granulierung kommen beispielsweise die druckbeaufschlagte Unterwassergranulierung, Granulierung mit rotierenden Messern und Kühlung durch Sprühvernebelung von Temperierflüssigkeiten oder Zerstäubungsgranulation in Betracht. Zur Durchführung des Verfahrens geeignete Apparateanordnungen sind zum Beispiel:
- Polymerisationsreaktor - statischer Mischer/Kühler - Granulator
- Polymerisationsreaktor - Extruder - Granulator
- Extruder - statischer Mischer - Granulator
- Extruder - Granulator.

Weiterhin kann die Anordnung Seitenextruder zur Einbringung von Additiven, z.B. von Feststoffen oder thermisch empfindlichen Zusatzstoffen, aufweisen.

Die treibmittelhaltige Polymerschmelze wird in der Regel mit einer Temperatur im Bereich von 140 bis 300 °C, bevorzugt im Bereich von 160 bis 240 °C durch die Düsenplatte gefördert. Eine Abkühlung bis in den Bereich der Glasübergangstemperatur ist nicht notwendig.

Die Düsenplatte wird mindestens auf die Temperatur der treibmittelhaltigen Polymerschmelze beheizt. Bevorzugt liegt die Temperatur der Düsenplatte im Bereich von 20 bis 100 °C über der Temperatur der treibmittelhaltigen Polymerschmelze. Dadurch werden Polymerablagerungen in den Düsen verhindert und eine störungsfreie Granulierung gewährleistet.

Um marktfähige Granulatgrößen zu erhalten, sollte der Durchmesser (D) der Düsenbohrungen am Düsenaustritt im Bereich von 0,2 bis 1,5 mm, bevorzugt im Bereich von 0,3 bis 1,2 mm, besonders bevorzugt im Bereich von 0,3 bis 0,8 mm liegen. Damit lassen sich auch nach Strangaufweitung Granulatgrößen unter 2 mm, insbesondere im Bereich von 0,4 bis 1,4 mm gezielt einstellen.

Besonders bevorzugt ist ein Verfahren zur Herstellung von expandierbaren Styrolpolymeren (EPS), umfassend die Schritte:
a) Einmischen eines Treibmittels, des erfindungsgemäßen Flammschutzsystems sowie gegebenenfalls weiterer Hilfs- und Zusatzstoffe in die Polymerschmelze mittels statischer oder dynamischer Mischer bei einer Temperatur von mindestens 150 °C,
b) Kühlen der treibmittelhaltigen Polymerschmelze auf eine Temperatur von mindestens 120 °C,
c) Austrag durch eine Düsenplatte mit Bohrungen, deren Durchmesser am Düsenaustritt höchstens 1,5 mm beträgt, und
d) Granulieren der treibmittelhaltigen Schmelze direkt hinter der Düsenplatte unter Wasser bei einem Druck im Bereich von 1 bis 20 bar.

Bevorzugt ist es auch, die expandierbaren Styrolpolymere (EPS) durch Suspensionspolymerisation in wässriger Suspension in Gegenwart des erfindungsgemäßen Flammschutzsystems und eines Treibmittels herzustellen.

Bei der Suspensionspolymerisation wird als Monomer bevorzugt Styrol allein eingesetzt. Es kann jedoch zu bis zu 20% seines Gewichts durch andere ethylenisch ungesättigte Monomere wie Alkylstyrole, Divinylbenzol, Acrylnitril, 1,1-Diphenylethen und / oder alpha-Methylstyrol ersetzt sein.

Bei der Suspensionspolymerisation können die üblichen Hilfsmittel, z.B. Peroxidinitiatoren, Suspensionsstabilisatoren, Treibmittel, Kettenüberträger, Expandierhilfsmittel, Keimbildner oder Weichmacher, zugesetzt werden. Das erfindungsgemäße Flammschutzsystem wird bei der Polymerisation in Mengen von 0,2 bis 20 Gew.-Teilen, vorzugsweise von 1 bis 10 Gew.-Teilen zugesetzt. Treibmittel werden in Mengen von 2 bis 10 Gew.-Teilen, bezogen auf Monomer, zugesetzt. Man kann sie vor, während oder nach der Polymerisation der Suspension zusetzen. Geeignete Treibmittel sind z.B. aliphatische Kohlenwasserstoffe mit 4 bis 6 Kohlenstoffatomen. Es ist vorteilhaft, als Suspensionsstabilisatoren anorganische Pickering-Dispergatoren, z.B. Magnesiumpyrophosphat oder Calciumphosphat, einzusetzen.

Bei der Suspensionspolymerisation entstehen perlförmige, im Wesentlichen runde Teilchen mit einem mittleren Durchmesser im Bereich von 0,2 bis 2 mm.

Zur Verbesserung der Verarbeitbarkeit können die fertigen expandierbaren Styrolpolymergranulate durch Glycerinester, Antistatika oder Antiverklebungsmittel beschichten werden.

Das EPS-Granulat kann zum Beispiel mit Glycerinmonostearat GMS (typischerweise 0,25%), Glycerintristearat (typischerweise 0,25%), feinteiliger Kieselsäure Aerosil R972 (typischerweise 0,12%), Zn-Stearat (typischerweise 0,15%) und/oder Antistatikum beschichtet werden.

Die expandierbaren Polystyrolteilchen können zu Polystyrolschaumstoffen mit Dichten im Bereich von 5 bis 200 kg/m³, bevorzugt 10 bis 50 kg/m³ verarbeitet werden. Hierzu werden die expandierbaren Partikel vorgeschäumt. Dies geschieht zumeist durch Erwärmen der Partikel mit Wasserdampf in sogenannten Vorschäumern. Die so vorgeschäumten Partikel werden danach zu Formkörpern verschweißt. Hierzu werden die vorgeschäumten Partikel in nicht gasdicht schließende Formen gebracht und mit Wasserdampf beaufschlagt. Nach dem Abkühlen können die Formteile entnommen werden.

In einer weiteren bevorzugten Ausführungsform ist der Schaumstoff ein extrudiertes Styrolpolymer (XPS), erhältlich durch:
a) Erhitzen einer Polymerkomponente P, die mindestens ein Styrolpolymer enthält, zur Ausbildung einer Polymerschmelze,
b) Einbringen einer Treibmittelkomponente T in die Polymerschmelze zur Ausbildung einer schäumbaren Schmelze,
c) Extrusion der schäumbaren Schmelze in einen Bereich niedrigeren Drucks unter Aufschäumen zu einem Extrusionsschaum, und
d) Zugabe des erfindungsgemäßen Flammschutzsystems sowie gegebenenfalls weiterer Hilfs- und Zusatzstoffe in mindestens einem der Schritte a) und b).

Erfindungsgemäße Schaumstoffe auf Basis von Styrolpolymeren, insbesondere EPS und XPS, eignen sich beispielsweise zur Verwendung als Dämm- und/oder Isolierstoffe, insbesondere in der Bauindustrie. Weiterhin eignen sie sich als Verpackungsmaterial. Bevorzugt ist eine Verwendung als halogenfreies Dämm- und/oder Isoliermaterial, insbesondere in der Bauindustrie. Weiterhin bevorzugt ist der Einsatz als halogenfreies Verpackungsmaterial.

Erfindungsgemäße Schaumstoffe auf Basis von Styrolpolymeren, wie EPS und XPS, zeigen bevorzugt eine Verlöschzeit (Brandtest B2 nach DIN 4102 bei einer Schaumstoffdichte von 15 kg/m³ und einer Ablagerungszeit von mindestens 72 h) von ≤ 15 sec, besonders bevorzugt ≤ 10 sec, und erfüllen damit die Bedingungen zum Bestehen des genannten Brandtests, solange die Flammenhöhe die in der Norm angegebene Messmarke nicht überschreitet.

Die Erfindung wird durch die nachfolgenden Beispiele näher erläutert.

### Beispiele

### A. Beispiele für Flammschutzmittel und Synergisten

Am Beispiel folgender Verbindungen wird die Erfindung erläutert. Die eingesetzten Flammschutzmittel und Synergisten wurden entweder kommerziell bezogen (siehe Tabellen in diesem Kapitel) oder synthetisiert (siehe nachfolgendes Kapitel).

**Flammschutzmittel:**

| | | |
|---|---|---|
| 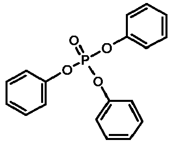 | Triphenylphosphat (kommerziell erhältlich als Disflamoll® TP von Lanxess) | FR1 |
| 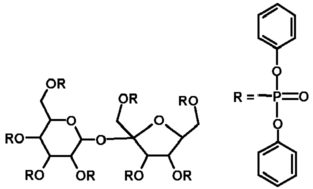 | Phosphatierte Saccharose | FR2 |
| 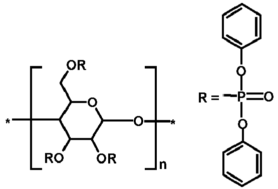 | Phosphatierte Cellulose | FR3 |

**Synergisten:**

| S₈ | Schwefel | S1 |
|---|---|---|
| 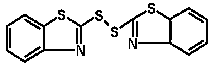 | 2,2-Dithio-bis-(benzothiazol) | S2 |
| 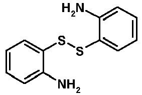 | 2-Aminophenyldisulfid | S3 |
| 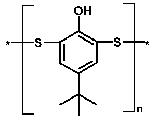 | Poly-(*tert*-butylphenoldisulfid) | S4 |
| 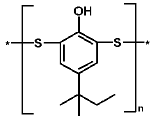 | Poly-(*tert*-amylphenoldisulfid) | S5 |
| 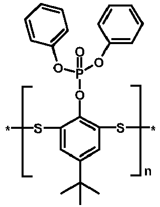 | Phosphatiertes Poly-(*tert*-butylphenoldisulfid) | S6 |
| 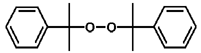 | Dicumylperoxid | S7 |
| 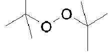 | Di-*tert*-butylperoxid | S8 |
| 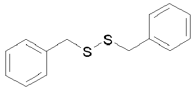 | Dibenzyldisulfid | S9 |
| 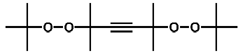 | 2,5-Dimethyl-2,5-di-(*tert*-butylperoxy)hexin-3 | S10 |

| | | |
|---|---|---|
| S1: kommerziell erhältlich von Sigma Aldrich. S2: kommerziell erhältlich als Vulkacit® DM/C von Lanxess. S3: kommerziell erhältlich von Sigma Aldrich. S4: kommerziell erhältlich von Arkema. S5: kommerziell erhältlich von Arkema. S7: kommerziell erhältlich als Perkadox® BC-FF von AkzoNobel. S8: kommerziell erhältlich als Trigonox® B von AkzoNobel. S9: kommerziell erhältlich von Sigma Aldrich. S10: kommerziell erhältlich als Trigonox® 145-E85 von AkzoNobel. | | |

### B. Synthesebeispiele

### Synthese der phosphorylierten Zuckerpolymerisate (FR2 und FR3):

Die Phosphatierung von Cellulose erfolgte analog zu der in BE 611292 offenbarten Vorschrift.

Die Phosphatierung von Saccharose erfolgte nicht analog zu BE 611292, sondern nach folgender abgewandelter und verbesserter Vorschrift:

### Phosphatierung von Saccharose:

### Apparatur:

10 L-Miniplantreaktor mit 3-stufigem Kreuzbalkenrührer, Normag-Aufsatz für Rückfluss und Destillation, Dosiersystem D2-Controller mit ProMinent-Pumpe, Huber Unistat Tango (geregelt durch Reaktorinnentemperatur); Reaktor unter Stickstoffinertisierung.

**Ansatz:**

| | | |
|---|---|---|
| 598,5 g | (1,75 mol) | Saccharose, gemahlen |
| 1149,4 g | (14,0 mol) | 1-Methylimidazol |
| 3763,3 g | (14,0 mol) | Chlordiphenylphosphat |
| 7,0 L | | Chloroform |

In einem stickstoffinertisierten 10 L-Miniplantreaktor wurden gemahlene Saccharose (598,5 g, 1,75 mol), 1-Methylimidazol (1149,4 g, 14,0 mol) und Chloroform (7,0 L) vorgelegt. Die Suspension wurde auf 40 °C Innentemperatur aufgeheizt. Anschließend wurde Chlordiphenylphosphat (3763,3 g, 14,0 mol) innerhalb von 3 h mit einem Massenstrom von 1253,5 g/h zudosiert. Das Reaktionsgemisch wurde 20 h bei 40 °C nachgerührt. Am Ende der Nachrührzeit war das Gemisch dunkelgelb gefärbt und völlig klar. Weder das Produkt noch Methylimidazoliumhydrochlorid fiel unter den Reaktionsbedingungen aus. Mittels ³¹P-NMR konnte vollständiger (> 99%) Umsatz nachgewiesen werden.

Der Ansatz wurde nacheinander mit entionisiertem Wasser (3,0 L), verdünnter Natronlauge (3,0 L, 5% (w/w)) und verdünnter NaCI-Lösung (2 x 3,0 L, 3% (w/w)) gewaschen. Die Phasentrennung erfolgte hinreichend schnell. Die resultierende, wassertrübe organische Phase wurde im Reaktor im Vakuum zur Trockene eingeengt. (Zunächst wurde bei 440 mbar und 60 °C Manteltemperatur der Großteil des Chloroform-Wasserazeotrops abdestilliert. Anschließend wurde das Vakuum langsam auf 17 mbar abgesenkt und gleichzeitig die Manteltemperatur auf 120 °C erhöht. Die finalen Bedingungen wurden für 1,5 h aufrecht erhalten.)

Das Produkt wurde als cremefarbene, hochviskose Flüssigkeit (Ausbeute: 3663 g, 95 % d. Theorie) erhalten.

### Analytische Daten:

| | |
|---|---|
| **³¹P-NMR**(CDCl₃) [ppm]: -10.7- -12.9 (m), -17.0 (s, Triphenylphosphat). | |
| **Elementaranalyse** (C₁₀₈H₉₄O₃₅P₈): | ber.: C: 59.0%, O: 25.5%, H: 4.3%, P: 11.3%; |
| | gef.: C: 56.6%, O: 26.7%, H: 4.0%, P: 10.0%. |
| **OH-Zahl** (nach DIN 53240): 15 mg KOH / g. | |
| **Wasserbestimmung** (nach Karl Fischer): 0.02 g / 100 g. | |
| **Chlorgehalt** (gesamt, nach DIN 51408-1): < 0.2%. | |
| **Thermogravimetrische Analyse (TGA)** (unter Argon): | |
| 243 °C (2% Masseverlust), 272 °C (5% Masseverlust), 288 °C (10% Masseverlust). | |
| **Synthese von phosphatiertem Poly-(*tert*-butylphenoldisulfid) (S6):** | |
| Die Phosphatierung von Poly-(*tert*-butylphenoldisulfid) (S4) erfolgte analog zu der in der nicht vorveröffentlichten europäischen Patentanmeldung mit der Anmeldenummer 10197052 vorgeschlagenen Methode. | |

### C. Anwendungsbeispiele

### Flammschutztests:

### Beschreibung der Versuche:

Die Ermittlung des Brandverhaltens der Schaumstoffplatten erfolgte, wenn nicht anders angegeben, bei einer Schaumstoffdichte von 15 kg/m³ nach DIN 4102 (Brandtest B2).

Als Vergleich wurden Hexabromcyclododecan (im Folgenden als HBCD bezeichnet) sowie Triphenylphosphat (FR1) eingesetzt.

### Expandierbare Styrolpolymerisate (Extrusionsprozess):

7 Gew.-Teile n-Pentan wurden in eine Polystyrolschmelze aus PS 148H (Mw = 240 000 g/mol, Mn = 87 000 g/mol, bestimmt mittels GPC, RI-Detektor, Polystyrol (PS) als Standard) der BASF SE mit einer Viskositätszahl VZ von 83 ml/g eingemischt. Nach Abkühlen der treibmittelhaltigen Schmelze von ursprünglich 260 °C auf eine Temperatur von 190 °C wurde eine Polystyrolschmelze, welche die in der Tabelle genannten Flammschutzmittel und Synergisten enthielt, über einen Seitenstromextruder in den Hauptstrom eingemischt.

Die angegebenen Mengen in Gew.-Teilen beziehen sich auf die gesamte Polystyrolmenge (100 Gew.-Teile).

Das Gemisch aus Polystyrolschmelze, Treibmittel und Flammschutzmittel wurde mit 60 kg/h durch eine Düsenplatte mit 32 Bohrungen (Durchmesser der Düsen 0,75 mm) gefördert. Mit Hilfe einer druckbeaufschlagten Unterwassergranulierung wurden kompakte Granulate mit enger Größenverteilung hergestellt.

Das Molekulargewicht der Granulate betrug 220 000 g/mol (Mw) bzw. 80 000 g/mol (Mn) (bestimmt mittels GPC, RI-Detektor, PS als Standard). Durch Einwirkung von strömendem Wasserdampf wurden die Granulate vorgeschäumt und nach 12-stündiger Lagerung durch weitere Behandlung mit Wasserdampf in einer geschlossenen Form zu Schaumstoffblöcken einer Dichte von 15 kg/m³ verschweißt. Die Ermittlung des Brandverhaltens der Schaumstoffplatten erfolgte nach 72-stündiger Lagerung bei einer Schaumstoffdichte von 15 kg/m³ nach DIN 4102.

Die Ergebnisse sind in Tabelle 1 zusammengestellt.

**Tabelle 1: Brandverhalten erfindungsgemäßer Polymerzusammensetzungen (Beispiele) und Vergleichsbeispiele.**

| **Beispiel** | **Flammschutzmittel** (Gew.-Teile bezogen auf 100 Gew.-Teile Polystyrol) | **Synergist** (Gew.-Teile bezogen auf 100 Gew.-Teile Polystyrol) | **Brandtest** (B2 nach DIN 4102) / **Verlöschzeit** [s] |
|---|---|---|---|
| **VB1** | - | - | nicht bestanden / brennt ab |
| **VB2** | HBCD (4,0) | - | bestanden / 6,4 s |
| **VB3** | FR1 (5,0) | S2 (5,0) | bestanden / 6,9 s |
| **1** | FR2 (20,0) | - | bestanden / 12,3 s |
| **2** | FR2 (5,0) | S1 (2,5) | bestanden / 9,5 s |
| **3** | FR2 (5,0) | S2 (5,0) | bestanden / 5,7 s |
| **4** | FR2 (5,0) | S3 (1,5) | bestanden / 8,6 s |
| **5** | FR2 (5,0) | S4 (2,5) | bestanden / 6,6 s |
| **6** | FR2 (2,5) | S4 (4,0) | bestanden / 6,2 s |
| **7** | FR2 (5,0) | S5 (2,5) | bestanden / 10,4 s |
| **8** | FR2 (2,5) | S5 (4,0) | bestanden / 6,1 s |
| **9** | FR2 (5,0) | S6 (5,0) | bestanden / 8,3 s |
| **10** | FR3 (8,0) | S1 (5,0) | bestanden / 9,5 s |
| **11** | FR3 (8,0) | S2 (5,0) | bestanden / 10,8 s |
| **12** | FR3 (8,0) | S4 (4,0) | bestanden / 8,7 s |

Ferner wurden der Einfluss der Schaumstoffdichte der aus EPS hergestellten Polystyrolschaumstoffprüfkörper auf das Brandverhalten (Tabelle 2) sowie der Einfluss verschiedener Flammschutzmittel auf die Wärmeformbeständigkeit (Tabelle 3) und die Druckspannung (Tabelle 4) der Polystyrolschaumstoffprüfkörper untersucht.

**Tabelle 2: Einfluss der Schaumstoffdichte von aus EPS hergestellten Polystyrolschaumstoffprüfkörpern auf das Brandverhalten.**

| **Beispiel** | **Flammschutzmittel + ggf. Synergist** (Gew.-Teile bezogen auf 100 Gew.-Teile Polystyrol) | **Schaumstoffdichte** [kg/m3] (ISO 845) | **Brandtest** (B2 nach DIN 4102) / **Verlöschzeit** [s] |
|---|---|---|---|
| **5** | FR2 (5,0) + S4 (2,5) | 15,3 | bestanden / 6,6 s |
| **13** | FR2 (5,0) + S4 (2,5) | 25,1 | bestanden / 8,2 s |
| **14** | FR2 (5,0) + S4 (2,5) | 50,8 | bestanden / 10,1 s |

**Tabelle 3: Einfluss verschiedener Flammschutzmittel auf die Wärmeformbeständigkeit von aus EPS hergestellten Polystyrolschaumstoffprüfkörpern (mit Vergleichsbeispielen).**

| **Beispiel** | **Flammschutzmittel + ggf. Synergist** (Gew.-Teile bezogen auf 100 Gew.-Teile Polystyrol) | **Wärmeformbeständigkeit** [%] (nach DIN EN 1604; lineare Maßänderung nach 48 h, 70 °C) |
|---|---|---|
| **VB1** | - | 0,0 |
| **VB2** | HBCD (4,0) | 0,5 |
| **VB3** | FR1 (5,0) + S2 (5,0) | > 5 |
| **1** | FR2 (20,0) | > 5 |
| **2** | FR2 (5,0) + S1 (2,5) | 1,7 |
| **3** | FR2 (5,0) + S2 (5,0) | 4,0 |
| **4** | FR2 (5,0) + S3 (1,5) | 1,6 |
| **5** | FR2 (5,0) + S4 (2,5) | 0,5 |
| **6** | FR2 (2,5) + S4 (4,0) | 0,5 |
| **7** | FR2 (5,0) + S5 (2,5) | 0,8 |
| **12** | FR3 (8,0) + S4 (4,0) | 0,9 |

**Tabelle 4: Einfluss verschiedener Flammschutzmittel auf die Druckspannung von aus EPS hergestellten Polystyrolschaumstoffprüfkörpern (mit Vergleichsbeispielen).**

| **Beispiel** | **Flammschutzmittel + ggf. Synergist** (Gew.-Teile bezogen auf 100 Gew.-Teile Polystyrol) | **Druckspannung** [kPa] (nach ISO 844) |
|---|---|---|
| **VB2** | HBCD (4,0) | 75,2 |
| **VB3** | FR1 (5,0) + S2 (5,0) | 60,0 |
| **1** | FR2 (20,0) | 63,5 |
| **2** | FR2 (5,0) + S1 (2,5) | 72,8 |
| **3** | FR2 (5,0) + S2 (5,0) | 66,9 |
| **4** | FR2 (5,0) + S3 (1,5) | 68,3 |
| **5** | FR2 (5,0) + S4 (2,5) | 75,3 |
| **6** | FR2 (2,5) + S4 (4,0) | 75,0 |
| **7** | FR2 (5,0) + S5 (2,5) | 73,1 |
| **12** | FR3 (8,0) + S4 (4,0) | 71,6 |

### Styrolpolymerisate (Miniextruder-Experimente):

Polystyrol 158K wurde mit den jeweiligen Flammschutz-Additiven in einem Extruder (DSM Micro 15) bei 180 °C während 5 min extrudiert. Die Vicat-Teststäbe wurden mit einer Micro-Injection Moulding Machine 10cc (Fa. DSM) spritzgegossen.

Die Ergebnisse der Vicat-Messungen sind in Tabelle 5 zusammengefasst.

**Tabelle 5: Einfluss verschiedener Flammschutzmittel auf die Vicat-Erweichungstemperatur von Polystyrolprüfkörpern (mit Vergleichsbeispielen).**

| **Beispiel** | **Flammschutzmittel + ggf. Synergist** (Gew.-Teile bezogen auf 100 Gew.-Teile Polystyrol) | **Vicat-Erweichungstemperatur VST/B/50** [°C] (nach ISO 306) |
|---|---|---|
| **VB4** | - | 101 |
| **VB5** | HBCD (4,0) | 96 |
| **VB6** | FR1 (5,0) + S2 (5,0) | 77 |
| **VB7** | FR1 (5,0) + S4 (2,5) | 84 |
| **15** | FR2 (20,0) | 87 |
| **16** | FR2 (5,0) + S1 (2,5) | 93 |
| **17** | FR2 (5,0) + S2 (5,0) | 90 |
| **18** | FR2 (5,0) + S3 (1,5) | 93 |
| **19** | FR2 (5,0) + S4 (2,5) | 95 |
| **20** | FR2 (2,5) + S4 (4,0) | 96 |
| **21** | FR2 (5,0) + S5 (2,5) | 94 |
| **22** | FR3 (8,0) + S4 (4,0) | 93 |

### Expandierbare Styrolpolymerisate (Suspensionsprozess):

Für die Herstellung von EPS wurden Dibenzoylperoxid, Dicumylperoxid und/oder gegebenenfalls weitere Synergisten in Styrol gelöst. Dazu wurde das erfindungsgemäße, phosphorhaltige Flammschutzmittel gegeben. Die organische Phase wurde in vollentsalztes Wasser in einem Rührkessel eingebracht. Die wässrige Phase enthielt weiterhin Natriumpyrophosphat und Magnesiumsulfat-Heptahydrat (Bittersalz). Man erhitzte die Suspension innerhalb von 1,75 Stunden auf 104 °C und anschließend innerhalb von 5,5 Stunden auf 136 °C. 1.8 Stunden nach Erreichen von 80 °C wurde der Emulgator K30 (ein Gemisch verschiedener linearer Alkylsulfonate, Lanxess AG) zudosiert. Nach einer weiteren Stunde wurden 7,8 Gew.-% Pentan nachdosiert. Schließlich wurde bei einer Endtemperatur von 136 °C auspolymerisiert.

Die erhaltenen treibmittelhaltigen Polymerisatperlen wurden abdekantiert, von Innenwasser durch Trocknung befreit und mit 0,25 Gew.-% eines Standard EPS Coating (hier Mischung aus 60 Gew.-% Glycerintristearat, 30 Gew.-% Glycerinmonostearat und 10 Gew.-% Fällungskieselsäure FK320) beschichtet.

Durch Einwirkung von strömendem Wasserdampf wurden die treibmittelhaltigen Polystyrolperlen vorgeschäumt und nach 12-stündiger Lagerung durch weitere Behandlung mit Wasserdampf in einer geschlossenen Form zu Schaumstoffblöcken einer Dichte von 15 kg/m³ verschweißt. Die Ermittlung des Brandverhaltens der Schaumstoffplatten erfolgte nach 72-stündiger Lagerung bei einer Schaumstoffdichte von 15 kg/m³ nach DIN 4102.

Die Ergebnisse sind in Tabelle 6 zusammengefasst.

**Tabelle 6: Brandverhalten erfindungsgemäßer Polymerzusammensetzungen (Beispiele) und Vergleichsbeispiele**

| **Beispiel** | **Flammschutzmittel** (Gew.-Teile bezogen auf 100 Gew.-Teile Styrol) | **Synergist** (Gew.-Teile bezogen auf 100 Gew.-Teile Styrol) | **Brandtest** (B2 nach DIN 4102) / **Verlöschzeit** [s] |
|---|---|---|---|
| **VB8** | - | - | nicht bestanden / brennt ab |
| **VB9** | HBCD (3,5) | - | bestanden / 7,1 s |
| **23** | FR2 (5,0) | S7 (2,5) | bestanden / 8,6 s |
| **24** | FR2 (5,0) | S8 (2,5) | bestanden / 9,3 s |
| **25** | FR2 (5,0) | S9 (2.5) | bestanden / 9.0 s |
| **26** | FR2 (5,0) | S10 (2.5) | bestanden / 8.4 s |

### Extrudierte Polystyrol-Schaumstoffplatten:

100 Gew.-Teile Polystyrol 158K (Mw = 261 000 g/mol, Mn = 77 000 g/mol bestimmt mittels GPC, RI-Detektor, PS als Standard) der BASF SE mit einer Viskositätszahl von 98 ml/g, 0,1 Teile Talkum als Keimbildner zur Regelung der Zellgröße und die in der Tabelle angegebenen Teile an Flammschutzmitteln sowie gegebenenfalls Schwefel (Synergist) wurden in einem Extruder mit einem inneren Schneckendurchmesser von 120 mm kontinuierlich zugeführt. Durch eine in den Extruder angebrachte Einlassöffnung wurde gleichzeitig ein Treibmittelgemisch aus 3,25 Gew.-Teilen Ethanol und 3,5 Gew.-Teilen CO₂ kontinuierlich eingedrückt. Das in dem Extruder bei 180 °C gleichmäßig geknetete Gel wurde durch eine Beruhigungszone geführt und nach einer Verweilzeit von 15 Minuten mit einer Austrittstemperatur von 105 °C durch eine 300 mm breite und 1,5 mm weite Düse in die Atmosphäre extrudiert. Der Schaum wird durch einen mit dem Extruder verbundenen Formkanal geführt, wobei eine geschäumte Plattenbahn mit einem Querschnitt 650 mm x 50 mm und einer Dichte von 40 g/l entstand. Das Molekulargewicht des Polystyrols betrug 240 000 g/mol (Mw) bzw. 70 000 g/mol (Mn) (bestimmt mittels GPC, RI-Detektor, PS als Standard). Das Produkt wurde in Platten geschnitten. Geprüft wurde das Brandverhalten der Proben mit Dicken von 10 mm nach einer Ablagerungszeit von 30 Tagen nach DIN 4102.

Die Ergebnisse sind in Tabelle 7 zusammengefasst.

**Tabelle 7: Brandverhalten erfindungsgemäßer Polymerzusammensetzungen (Beispiele) und Vergleichsbeispiele**

| **Beispiel** | **Flammschutzmittel** (Gew.-Teile bezogen auf 100 Gew.-Teile Polystyrol) | **Synergist** (Gew.-Teile bezogen auf 100 Gew.-Teile Polystyrol) | **Brandtest** (B2 nach DIN 4102) / **Verlöschzeit** [s] |
|---|---|---|---|
| **VB10** | - | - | nicht bestanden / brennt ab |
| **VB11** | HBCD (4,0) | - | bestanden / 7,2 s |
| **27** | FR2 (20,0) | - | bestanden / 11,9 s |
| **28** | FR2 (5,0) | S2 (5,0) | bestanden / 9,3 s |
| **29** | FR2 (5,0) | S3 (1,5) | bestanden / 7,2 s |
| **30** | FR2 (5,0) | S4 (2,5) | bestanden / 6,2 s |
| **31** | FR2 (2,5) | S4 (4,0) | bestanden / 5,7 s |
| **32** | FR2 (5,0) | S5 (2,5) | bestanden / 8,5 s |
| **33** | FR2 (5,0) | S6 (5,0) | bestanden / 7,9 s |
| **34** | FR3 (8,0) | S2 (5,0) | bestanden / 8,7 s |
| **35** | FR3 (8,0) | S4 (4,0) | bestanden / 8,1 s |

Die Anwendungsbeispiele belegen, dass mit dem erfindungsgemäßen Flammschutzsystem halogenfreie Schaumstoffe auf Basis von Styrolpolymeren mit niedriger Dichte hergestellt werden können, die ein Brandverhalten aufweisen, das vergleichbar mit oder besser als das Brandverhalten entsprechender Schaumstoffe ist, welche mit im Stand der Technik beschriebenen halogenhaltigen Flammschutzmitteln ausgerüstet sind. Darüber hinaus zeigen die Beispiele, dass die erfindungsgemäßen Schaumstoffe sich durch gute Wärmeformbeständigkeiten, Druckspannungen und Vicat-Erweichungstemperaturen auszeichnen.

## Patentansprüche

1. Verwendung einer Mischung, enthaltend
a) mindestens eine Flammschutzkomponente i) aus der Gruppe phosphorylierte Di-, Oligo- und Polysaccharide mit einem Phosphorgehalt im Bereich von 0,5 bis 40 Gew.-%, bezogen auf das jeweilige phosphorylierte Di-, Oligo- oder Polysaccharid, und
b) mindestens eine Flammschutzkomponente ii) und/oder iii), wobei
die Flammschutzkomponente ii) aus der Gruppe elementarer Schwefel und organische Schwefelverbindungen gewählt ist und der Schwefelgehalt einer jeweiligen organischen Schwefelverbindung im Bereich von 5 bis 80 Gew.-% liegt, und
die Flammschutzkomponente iii) ein organisches Peroxid ist,
als Flammschutzsystem.

2. Verwendung gemäß Anspruch 1, **dadurch gekennzeichnet, dass** das phosphorylierte Di-, Oligo- oder Polysaccharid in der Komponente i) mindestens eine Gruppe der Formel (I) enthält, wobei die Symbole und Indizes folgende Bedeutungen haben: 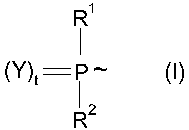
∼ ist die Bindung an das O-Atom einer in dem Di-, Oligo- oder Polysaccharid enthaltenen Hydroxylgruppe;
Y ist O oder S;
t ist 0 oder 1;
R¹, R² sind gleich oder verschieden H, lineares oder verzweigtes C₁-C₁₈-Alkyl, lineares oder verzweigtes C₂-C₁₈-Alkenyl, lineares oder verzweigtes C₂-C₁₈-Alkinyl, C₃-C₁₀-Cycloalkyl, C₆-C₁₀-Aryl, Heteroaryl, C₆-C₁₀-Aryl-C₁-C₁₀-Alkyl, OR³, SR³, NR³R⁴, COR³, COOR³, CONR³R⁴, oder R¹ und R² bilden zusammen mit dem P-Atom, an das sie gebunden sind, ein 4 bis 8-gliedriges Ringsystem;
R³, R⁴ sind gleich oder verschieden H, lineares oder verzweigtes C₁C₁₆-Alkyl, lineares oder verzweigtes C₂-C₁₆-Alkenyl, lineares oder verzweigtes C₂-C₁₆-Alkinyl, C₃-C₁₀-Cycloalkyl, C₆-C₁₀-Aryl, Heteroaryl oder C₆-C₁₀-Aryl-C₁-C₁₀-Alkyl;
wobei Aryl in den Resten R¹, R², R³, R⁴ jeweils unabhängig voneinander unsubstituiert oder mit 1 bis 3 Resten aus der Gruppe C₁-C₁₀-Alkyl, C₁C₁₀-Alkoxy, C₆-C₁₀-Aryl, C₆-C₁₀-Aryloxy, OH, CHO, COOH, CN, SH, SCH₃, SO₂CH₃, SO₂-C₆-C₁₀-Aryl, SO₃H, COCH₃, COC₂H₅, CO-C₆-C₁₀-Aryl und S-S-C₆-C₁₀-Aryl substituiert ist.

3. Verwendung gemäß Anspruch 2, wobei die Symbole und Indizes folgende Bedeutungen haben:
Y ist O;
t ist 1;
R¹, R² sind gleich oder verschieden Phenyl, Tolyl, Naphthyl oder OR³;
R³ ist H, lineares oder verzweigtes C₁-C₅-Alkyl, Phenyl, Tolyl oder Naphthyl.

4. Verwendung gemäß einem der Ansprüche 1 bis 3, wobei das Di-, Oligo- oder Polysaccharid in der Komponente i) Saccharose oder Cellulose ist.

5. Verwendung gemäß einem der Ansprüche 1 bis 4, wobei mindestens eine der in dem phosphorylierten Di-, Oligo- oder Polysaccharid enthaltenen Hydroxylgruppen mit einer Polyethergruppe substituiert ist.

6. Verwendung gemäß einem der Ansprüche 1 bis 5, wobei die organische Schwefelverbindung in der Komponente ii) ein Disulfid, oligomeres Disulfid oder polymeres Disulfid ist.

7. Verwendung gemäß einem der Ansprüche 1 bis 5, **dadurch gekennzeichnet, dass** die organische Schwefelverbindung in der Komponente ii) eine Schwefelverbindung der Formel (II) ist: 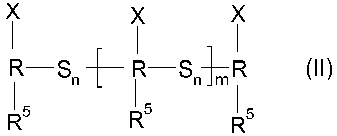 wobei die Symbole und Indizes folgende Bedeutungen haben:
R ist gleich oder verschieden C₆-C₁₂-Aryl, eine 5-10-gliedrige Heteroarylgruppe, die ein oder mehrere Heteroatome aus der Gruppe N, O und S enthält, C₁-C₁₈-Alkyl, C₂-C₁₈-Alkenyl, C₃-C₁₈-Alkinyl, C₃-C₁₀-Cycloalkyl oder C₆-C₁₂-Aryl-C₁-C₁₈-Alkyl;
X ist gleich oder verschieden OR⁶, SR⁶, NR⁶R⁷, COOR⁶, CONR⁶, SO₂R⁶, F, Cl, Br, R, H, oder eine Gruppe -Y¹-P(Y²)ₚR'R";
Y¹ ist O, S oder NR"';
Y² ist O oder S;
p ist 0 oder 1;
R', R" sind gleich oder verschieden C₁-C₁₈-Alkyl, C₂-C₁₈-Alkenyl, C₂-C₁₈-Alkinyl, C₆-C₁₂-Aryl, C₃-C₁₀-Cycloalkyl, C₆-C₁₂-Aryl-C₁-C₁₈-Alkyl, eine Heteroarylgruppe oder Heteroaryloxygruppe, die ein oder mehrere Heteroatome aus der Gruppe N, O und S enthält, O-(C₁C₁₈)-Alkyl, O-(C₂-C₁₈)-Alkenyl, O-(C₂-C₁₀)-Alkinyl, O-(C₆-C₁₂)-Aryl, O-(C₃-C₁₀)-Cycloalkyl oder (C₆-C₁₂)-Aryl-(C₁C₁₈)-Alkyl-O;
R'" ist H, C₁-C₁₈-Alkyl oder (P(Y²)ₚR'R");
R⁵ ist gleich oder verschieden C₁-C₁₈-Alkyl, C₂-C₁₈-Alkenyl, C₂-C₁₈-Alkinyl, C₆-C₁₂-Aryl, C₃-C₁₀-Cycloalkyl, C₆-C₁₂-Arl-C₁-C₁₈-Alkyl, eine Heteroaryl-gruppe, die ein oder mehrere Heteroatome aus der Gruppe N, O und S enthält, O-(C₁C₁₈)-Alkyl, O-(C₂-C₁₈)-Alkenyl, O-(C₃-C₁₈)-Alkinyl, O-(C₆-C₁₂)-Aryl, O-(C₃-C₁₀)-Cycloalkyl, (C₆-C₁₂)-Aryl-(C₁-C₁₈)-Alkyl-O, S-(C₁-C₁₈)-Alkyl, S-(C₁-C₁₈)-Alkenyl, S-(C₂-C₁₈)-Alkinyl, S-(C₆-C₁₂)-Aryl, S-(C₃-C₁₀)-Cycloalkyl, (C₆-C₁₂)-Aryl-(C₁-C₁₈)-Alkyl-S, OH, F, Cl, Br oder H;
R⁶, R⁷ sind gleich oder verschieden H, C₁-C₁₈-Alkyl, C₂-C₁₈-Alkenyl, C₂-C₁₈-Alkinyl, C₆-C₁₂-Aryl, C₃-C₁₀-Cycloalkyl, C₆-C₁₂-ArylC₁-C₁₈-Alkyl oder eine Heteroarylgruppe, die ein oder mehrere Heteroatome aus der Gruppe N, O und S enthält;
n ist eine ganze Zahl von 1 bis 8;
m ist eine Zahl von 0 bis 1000.

8. Verwendung gemäß einem der Ansprüche 1 bis 5 oder 7, wobei die organische Schwefelverbindung in der Komponente ii) gewählt ist aus:

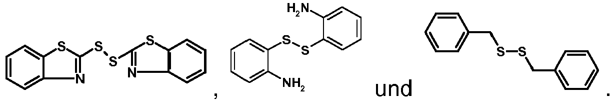

9. Verwendung gemäß einem der Ansprüche 1 bis 5 oder 7, wobei die organische Schwefelverbindung in der Komponente ii) gewählt ist aus:

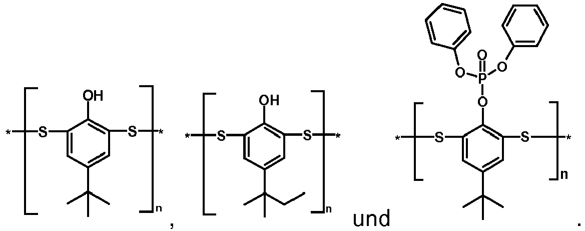

10. Verwendung gemäß einem der Ansprüche 1 bis 9, wobei das organische Peroxid in der Komponente iii) Dicumylperoxid, Di-*tert*-butylperoxid oder 2,5-Dimethyl-2,5-di-(*tert*-butylperoxy)hexin-3 ist.

11. Verwendung gemäß einem der Ansprüche 1 bis 10, wobei das Gewichtsverhältnis der Komponenten i) und ii) 1:10 bis 10:1 beträgt.

12. Verwendung gemäß einem der Ansprüche 1 bis 11, wobei das Gewichtsverhältnis der Komponenten i) und iii) 1:10 bis 10:1 beträgt.

13. Flammschutzsystem gemäß einem der Ansprüche 1 bis 12,
wobei ein Flammschutzsystem, enthaltend
a) ein mit Phosphorsäure oder Ammoniumphosphat in Gegenwart von Harnstoff phosphoryliertes cellulosehaltiges Material, und
b) elementaren Schwefel,
ausgenommen ist.

14. Verfahren zur flammhemmenden Ausrüstung von geschäumten oder ungeschäumten Polymeren, wobei man eine Schmelze des Polymers oder die Monomere, aus denen das Polymer erzeugt wird, mit dem Flammschutzsystem gemäß einem der Ansprüche 1 bis 12 vermischt.

15. Polymerzusammensetzung, enthaltend ein oder mehrere thermoplastische Polymere und das Flammschutzsystem gemäß einem der Ansprüche 1 bis 12.

16. Polymerzusammensetzung gemäß Anspruch 15, enthaltend 0,2 bis 10 Gew.-Teile (bezogen auf 100 Gew.-Teile des Polymers) des Flammschutzsystems.

17. Polymerzusammensetzung gemäß Anspruch 15 oder 16, **dadurch gekennzeichnet, dass** sie halogenfrei ist.

18. Polymerzusammensetzung gemäß einem der Ansprüche 15 bis 17, enthaltend ein Styrolpolymer.

19. Polymerzusammensetzung gemäß einem der Ansprüche 15 bis 18, **dadurch gekennzeichnet, dass** das Polymer ein Schaumstoff ist.

20. Polymerzusammensetzung gemäß Anspruch 19, **dadurch gekennzeichnet, dass** der Schaumstoff eine Dichte im Bereich von 5 bis 200 kg/m³ aufweist.

21. Polymerzusammensetzung gemäß Anspruch 18 in Form eines expandierbaren Styrolpolymers (EPS).

22. Verfahren zur Herstellung eines expandierbaren Styrolpolymers (EPS) gemäß Anspruch 21, umfassend die Schritte:
a) Einmischen eines Treibmittels und eines Flammschutzsystems gemäß einem der Ansprüche 1 bis 12 sowie gegebenenfalls weiterer Hilfs- und Zusatzstoffe in eine Styrolpolymerschmelze mittels statischer und/oder dynamischer Mischer bei einer Temperatur von mindestens 150 °C,
b) Kühlen der treibmittelhaltigen Styrolpolymerschmelze auf eine Temperatur von mindestens 120 °C,
c) Austrag durch eine Düsenplatte mit Bohrungen, deren Durchmesser am Düsenaustritt höchstens 1,5 mm beträgt, und
d) Granulieren der treibmittelhaltigen Schmelze direkt hinter der Düsenplatte unter Wasser bei einem Druck im Bereich von 1 bis 20 bar.

23. Verfahren zur Herstellung eines expandierbaren Styrolpolymers gemäß Anspruch 21, umfassend die Schritte:
a) Polymerisation einer oder mehrerer Styrolmonomere in Suspension,
b) Zugabe des Flammschutzsystems gemäß einem der Ansprüche 1 bis 12 sowie gegebenenfalls weiterer Hilfs- und Zusatzstoffe vor, während und/oder nach der Polymerisation,
c) Zugabe eines Treibmittels vor, während und/oder nach der Polymerisation, und
d) Abtrennen der expandierbaren das Flammschutzsystem enthaltenden Styrolpolymerteilchen von der Suspension.

24. Polymerzusammensetzung gemäß Anspruch 18 in Form eines Styrolpolymerextrusionsschaumstoffs (XPS).

25. Verfahren zur Herstellung eines Styrolextrusionsschaumstoffs (XPS) gemäß Anspruch 24, umfassend die Schritte:
a) Erhitzen einer Polymerkomponente P, die mindestens ein Styrolpolymer enthält, zur Ausbildung einer Polymerschmelze,
b) Einbringen einer Treibmittelkomponente T in die Polymerschmelze zur Ausbildung einer schäumbaren Schmelze,
c) Extrusion der schäumbaren Schmelze in einen Bereich niedrigeren Drucks unter Aufschäumen zu einem Extrusionsschaum, und
d) Zugabe des Flammschutzsystems gemäß einem der Ansprüche 1 bis 12 sowie gegebenenfalls weiterer Hilfs- und Zusatzstoffe in mindestens einem der Schritte a) und b).

26. Verwendung einer Polymerzusammensetzung gemäß Anspruch 21 oder 24 als Dämm- und/oder Isoliermaterial oder als Verpackungsmaterial.

## Claims

1. The use of a mixture comprising
a) at least one flame retardant component i) from the group of phosphorylated di-, oligo-, and polysaccharides having phosphorus in the range from 0.5 to 40% by weight, based on the respective phosphorylated di-, oligo-, or polysaccharide, and
b) at least one flame retardant component ii) and/or iii), where
flame retardant component ii) has been selected from the group of elemental sulfur and organic sulfur compounds, and the sulfur content of each organic sulfur compound is in the range from 5 to 80% by weight, and
flame retardant component iii) is an organic peroxide,
as a flame retardant system.

2. The use according to claim 1, wherein the phosphorylated di-, oligo- or polysaccharide in component i) comprises at least one group of the formula (I), where the definitions of the symbols and indices are as follows: 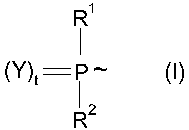
∼ is the bond to the O atom of a hydroxy group comprised within the di-, oligo-, or polysaccharide;
Y is O or S;
t is 0 or 1;
R¹ and R², being identical or different, are H, linear or branched C₁-C₁₈-alkyl, linear or branched C₂-C₁₈-alkenyl, linear or branched C₂-C₁₈-alkynyl, C₃-C₁₀-cycloalkyl, C₆-C₁₀-aryl, heteroaryl, C₆-C₁₀-aryl-C₁-C₁₀-alkyl, OR³, SR³, NR³R⁴, COR³, COOR³, CONR³R⁴, or R¹ and R² form, together with the P atom bonded thereto, a 4 to 8-membered ring system;
R³ and R⁴, being identical or different, are H, linear or branched C₁-C₁₆-alkyl, linear or branched C₂-C₁₆-alkenyl, linear or branched C₂-C₁₆-alkynyl, C₃-C₁₀-cycloalkyl, C₆-C₁₀-aryl, heteroaryl, or C₆-C₁₀-aryl-C₁-C₁₀-alkyl;
where aryl in the moieties R¹, R², R³, and R⁴, mutually independently in each case, has no substitution or has substitution by from 1 to 3 moieties from the group of C₁-C₁₀-alkyl, C₁-C₁₀-alkoxy, C₆-C₁₀-aryl, C₆-C₁₀-aryloxy, OH, CHO, COOH, CN, SH, SCH₃, SO₂CH₃, SO₂-C₆-C₁₀-Aryl, SO₃H, COCH₃, COC₂H₅, CO-C₆-C₁₀-aryl, and S-S-C₆-C₁₀-aryl.

3. The use according to claim 2, where the definitions of the symbols and indices are as follows:
Y is O;
t is 1;
R¹ and R², being identical or different, are phenyl, tolyl, naphthyl, or OR³;
R³ is H, or linear or branched C₁-C₅-alkyl, phenyl, tolyl, or naphthyl.

4. The use according to any of claims 1 to 3, where the di-, oligo-, or polysaccharide in component i) is sucrose or cellulose.

5. The use according to any of claims 1 to 4, where at least one of the hydroxy groups comprised within the phosphorylated di-, oligo-, or polysaccharide has substitution by a polyether group.

6. The use according to any of claims 1 to 5, where the organic sulfur compound in component ii) is a disulfide, oligomeric disulfide, or polymeric disulfide.

7. The use according to any of claims 1 to 5, wherein the organic sulfur compound in component ii) is a sulfur compound of the formula (II): 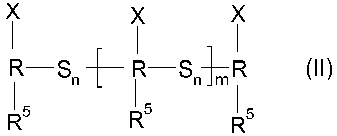 where the definitions of the symbols and indices are as follows:
R, being identical or different, is C₆-C₁₂-aryl, a 5-10-membered heteroaryl group which comprises one or more heteroatoms from the group of N, O, and S, C₁-C₁₈-alkyl, C₂-C₁₈-alkenyl, C₃-C₁₈-alkynyl, or C₃-C₁₀-cycloalkyl, or C₆-C₁₂-aryl-C₁-C₁₈-alkyl;
X, being identical or different, is OR⁶, SR⁶, NR⁶R⁷, COOR⁶, CONR⁶, SO₂R⁶, F, Cl, Br, R, H, or a -Y¹-P(Y²)ₚ R'R" group;
Y¹ is O, S or NR'";
Y2 is O or S;
p is 0 or 1;
R' and R", being identical or different, are C₁-C₁₈-alkyl, C₂-C₁₈-alkenyl, C₂-C₁₈-alkynyl, C₆-C₁₂-aryl, C₃-C₁₀-cycloalkyl, C₆-C₁₂-aryl-C₁-C₁₈-alkyl, or a heteroaryl group or heteroaryloxy group which comprises one or more heteroatoms from the group of N, O, and S, O-(C₁-C₁₈)-alkyl, O-(C₂-C₁₈)-alkenyl, O-(C₂-C₁₀)-alkynyl, O-(C₆-C₁₂)-aryl, O-(C₃-C₁₀)-cycloalkyl, or C₆-C₁₂)-aryl-(C₁-C₁₈)-alkyl-O;
R'" is H, C₁-C₁₈-alkyl or (P(Y²)ₚR'R");
R⁵, being identical or different, is C₁-C₁₈-alkyl, C₂-C₁₈-alkenyl, C₂-C₁₈-alkynyl, C₆-C₁₂-aryl, C₃-C₁₀-cycloalkyl, C₆-C₁₂-aryl-C₁-C₁₈-alkyl, a heteroaryl group which comprises one or more heteroatoms from the group of N, O, and S, O-(C₁-C₁₈)-alkyl, O-(C₂-C₁₈)-alkenyl, O-(C₃-C₁₈)-alkynyl, O-(C₆-C₁₂)-aryl, O-(C₃-C₁₀)-cycloalkyl, (C₆-C₁₂)-aryl-(C₁-C₁₈)-alkyl-O, S-(C₁-C₁₈)-alkyl, S-(C₁-C₁₈)-alkenyl, S-(C₂-C₁₈)-alkynyl, S-(C₆-C₁₂)-aryl, S-(C₃-C₁₀)-cycloalkyl, (C₆-C₁₂)-aryl-(C₁-C₁₈)-alkyl-S, OH, F, Cl, Br or H;
R⁶ and R⁷, being identical or different, are H, C₁-C₁₈-alkyl, C₂-C₁₈-alkenyl, C₂-C₁₈-alkynyl, C₆-C₁₂-aryl, C₃-C₁₀-cycloalkyl, C₆-C₁₂-aryl-C₁-C₁₈-alkyl, or a heteroaryl group which comprises one or more heteroatoms from the group of N, O, and S;
n is an integer from 1 to 8; and
m is a number from 0 to 1000.

8. The use according to any of claims 1 to 5 or 7, where the organic sulfur compound in component ii) has been selected from:

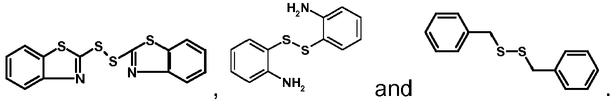

9. The use according to any of claims 1 to 5 or 7, where the organic sulfur compound in component ii) has been selected from:

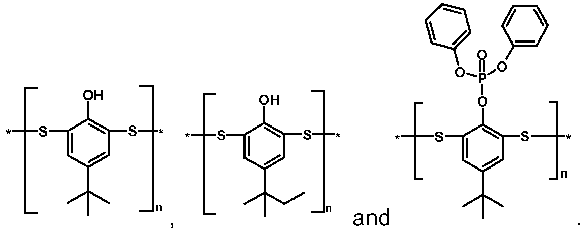

10. The use according to any of claims 1 to 9, where the organic peroxide in component iii) is dicumyl peroxide, di-*tert*-butyl peroxide or 2,5-dimethyl-2,5-di(*tert*-butylperoxy)hex-3-yne.

11. The use according to any of claims 1 to 10, where the ratio by weight of components i) and ii) is from 1:10 to 10:1.

12. The use according to any of claims 1 to 11, where the ratio by weight of components i) and iii) is from 1:10 to 10:1.

13. The flame retardant system according to any of claims 1 to 12,
where a flame retardant system comprising
a) a cellulosic material phosphorylated with phosphoric acid or ammonium phosphate in the presence of urea, and
b) elemental sulfur,
is excluded.

14. A process for rendering foamed or unfoamed polymers flame-retardant, where a melt of the polymer, or the monomers from which the polymer is produced, is mixed with the flame retardant system according to any of claims 1 to 12.

15. A polymer composition comprising one or more thermoplastic polymers and the flame retardant system according to any of claims 1 to 12.

16. The polymer composition according to claim 15, comprising from 0.2 to 10 parts by weight (based on 100 parts by weight of the polymer) of the flame retardant system.

17. The polymer composition according to claim 15 or 16, which is halogen-free.

18. The polymer composition according to any of claims 15 to 17 comprising a styrene polymer.

19. The polymer composition according to any of claims 15 to 18, wherein the polymer is a foam.

20. The polymer composition according to claim 19, wherein the density of the foam is in the range from 5 to 200 kg/m³.

21. The polymer composition according to claim 18 in the form of an expandable styrene polymer (EPS).

22. A process for producing an expandable styrene polymer (EPS) according to claim 21, comprising the following steps:
a) mixing to incorporate a blowing agent and a flame retardant system according to any of claims 1 to 12, and also optionally further auxiliaries and additives into a styrene polymer melt by means of static and/or dynamic mixers at a temperature of at least 150°C,
b) cooling of the styrene polymer melt comprising blowing agent to a temperature of at least 120°C,
c) discharge through a die plate with holes, the diameter of which at the die outlet is at most 1.5 mm, and
d) pelletization of the melt comprising blowing agent directly behind the die plate under water at a pressure in the range from 1 to 20 bar.

23. A process for producing an expandable styrene polymer according to claim 21, comprising the following steps:
a) polymerization of one or more styrene monomers in suspension,
b) addition of the flame retardant according to any of claims 1 to 12, and also optionally of further auxiliaries and additives prior to, during and/or after the polymerization reaction,
c) addition of a blowing agent prior to, during, and/or after the polymerization reaction, and
d) isolation, from the suspension, of the expandable styrene polymer particles comprising the flame retardant system.

24. The polymer composition according to claim 18 in the form of an extruded styrene polymer foam (XPS).

25. A process for producing an extruded styrene foam (XPS) according to claim 24, comprising the following steps:
a) heating of a polymer component P which comprises at least one styrene polymer, to form a polymer melt,
b) introduction of a blowing agent component T into the polymer melt to form a foamable melt,
c) extrusion of the foamable melt into a region of relatively low pressure with foaming to give an extruded foam, and
d) addition of the flame retardant system according to any of claims 1 to 12, and also optionally of further auxiliaries and additives, in at least one of the steps a) and b).

26. The use of a polymer composition according to claim 21 or claim 24 as insulation material or as packaging material.

## Revendications

1. Utilisation d'un mélange, contenant
a) au moins un composant ignifuge i) du groupe formé par les disaccharides, les oligosaccharides et les polysaccharides phosphorylés présentant une teneur en phosphore dans la plage de 0,5 à 40% en poids, par rapport au disaccharide, à l'oligosaccharide ou au disaccharide phosphorylé respectif, et
b) au moins un composant ignifuge ii) et/ou iii),
le composant ignifuge ii) étant choisi dans le groupe formé par le soufre élémentaire et les composés soufrés organiques et la teneur en soufre d'un composé soufré organique quelconque se situant dans la plage de 5 à 80% en poids et
le composant ignifuge iii) étant un peroxyde organique,
en tant que système ignifuge.

2. Utilisation selon la revendication 1, **caractérisée en ce que** le disaccharide, l'oligosaccharide ou le polysaccharide phosphorylé dans le composant i) contient au moins un groupe de formule (I), les symboles et les indices ayant les significations suivantes : 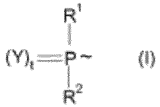
∼ représente la liaison à l'atome de O d'un groupe hydroxyle contenu dans le disaccharide, l'oligosaccharide ou le polysaccharide ;
Y représente O ou S ;
t vaut 0 ou 1 ;
R¹, R² représentent, de manière identique ou différente, H, C₁-C₁₈-alkyle linéaire ou ramifié, C₂-C₁₈-alcényle linéaire ou ramifié, C₂-C₁₈-alcynyle linéaire ou ramifié, C₃-C₁₀-cycloalkyle, C₆-C₁₀-aryle, hétéroaryle, C₆-C₁₀-aryl-C₁-C₁₀-alkyle, OR³, SR³, NR³R⁴, COR³, COOR³, CONR³R⁴, ou R¹ et R² forment, conjointement avec l'atome P auquel ils sont liés, un système cyclique de 4 à 8 chaînons ;
R³, R⁴ représentent, de manière identique ou différente, H, C₁-C₁₆-alkyle linéaire ou ramifié, C₂-C₁₆-alcényle linéaire ou ramifié, C₂-C₁₆-alcynyle linéaire ou ramifié, C₃-C₁₀-cycloalkyle, C₆-C₁₀-aryle, hétéroaryle, C₆-C₁₀-aryl-C₁-C₁₀-alkyle ;
aryle dans les radicaux R¹, R², R³, R⁴, indépendamment les uns des autres, étant à chaque fois non substitué ou substitué par 1 à 3 radicaux du groupe formé par C₁-C₁₀-alkyle, C₁-C₁₀-alcoxy, C₆-C₁₀-aryle, C₆-C₁₀-aryloxy, OH, CHO, COOH, CN, SH, SCH₃, SO₂CH₃, SO₂-C₆-C₁₀-aryle, SO₃H, COCH₃, COC₂H₅, CO-C₆-C₁₀-aryle et S-S-C₆-C₁₀-aryle.

3. Utilisation selon la revendication 2, les symboles et les indices présentant les significations suivantes,
Y représente O ;
t vaut 1 ;
R¹, R² représentent, de manière identique ou différente, phényle, toluyle, naphtyle ou OR³ ;
R³ représente H, C₁-C₅-alkyle linéaire ou ramifié, phényle, toluyle ou naphtyle.

4. Utilisation selon l'une quelconque des revendications 1 à 3, le disaccharide, l'oligosaccharide ou le polysaccharide dans le composant i) étant du saccharose ou de la cellulose.

5. Utilisation selon l'une quelconque des revendications 1 à 4, au moins un des groupes hydroxyle contenus dans le disaccharide, l'oligosaccharide ou le polysaccharide phosphorylé étant substitué par un groupe polyéther.

6. Utilisation selon l'une quelconque des revendications 1 à 5, le composé soufré organique dans le composant ii) étant un disulfure, un disulfure oligomère ou un disulfure polymère.

7. Utilisation selon l'une quelconque des revendications 1 à 5, **caractérisée en ce que** le composé soufré organique dans le composant ii) est un composé soufré de formule (II) : 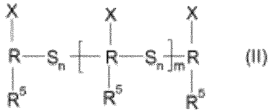 dans laquelle les symboles et les indices présentent les significations suivantes :
R représente, de manière identique ou différente, C₆-C₁₂-aryle, un groupe hétéroaryle de 5 à 10 chaînons, qui contient un ou plusieurs hétéroatomes du groupe formé par N, O et S, C₁-C₁₈-alkyle, C₂-C₁₈-alcényle, C₃-C₁₈-alcynyle, C₃-C₁₀-cycloalkyle ou C₆-C₁₂-aryl-C₁-C₁₈-alkyle ;
X représente, de manière identique ou différente, OR⁶, SR⁶, NR⁶R⁷, COOR⁶, CONR⁶, SO₂R⁶, F, Cl, Br, R, H ou un groupe -Y¹-P(Y²)ₚR'R" ;
Y¹ représente O, S ou NR'" ;
Y² représente O ou S ;
p vaut 0 ou 1 ;
R', R" représentent, de manière identique ou différente, C₁-C₁₈-alkyle, C₂-C₁₈-alcényle, C₂-C₁₈-alcynyle, C₆-C₁₂-aryle, C₃-C₁₀-cycloalkyle, C₆-C₁₂-aryl-C₁-C₁₈-alkyle, un groupe hétéroaryle ou un groupe hétéroaryloxy, qui contient un ou plusieurs des hétéroatomes du groupe formé par N, O et S, O-(C₁-C₁₈)-alkyle, O-(C₂-C₁₈)-alcényle, O-(C₂-C₁₀)-alcynyle, O-(C₆-C₁₂)-aryle, O-(C₃-C₁₀)-cycloalkyle ou (C₆-C₁₂)-aryl-(C₁-C₁₈)-alkyl-O ;
R'" représente H, C₁-C₁₈-alkyle ou (P(Y²)ₚR'R") ;
R⁵ représente, de manière identique ou différente, C₁-C₁₈-alkyle, C₂-C₁₈-alcényle, C₂-C₁₈-alcynyle, C₆-C₁₂-aryle, C₃-C₁₀-cycloalkyle, C₆-C₁₂-aryl-C₁-C₁₈-alkyle, un groupe hétéroaryle, qui contient un ou plusieurs hétéroatomes du groupe formé par N, O et S, O-(C₁-C₁₈)-alkyle, O-(C₂-C₁₈)-alcényle, O-(C₃-C₁₈)-alcynyle, O-(C₆-C₁₂)-aryle, O-(C₃-C₁₀)-cycloalkyle, (C₆-C₁₂)-aryl-(C₁-C₁₈)-alkyl-O, S-(C₁-C₁₈)-alkyle, S-(C₁-C₁₈)-alcényle, S-(C₂-C₁₈)-alcynyle, S-(C₆-C₁₂)-aryle, S-(C₃-C₁₀)-cycloalkyle, (C₆-C₁₂)-aryl-(C₁-C₁₈)-alkyl-S, OH, F, Cl, Br ou H ;
R⁶, R⁷ représentent, de manière identique ou différente, H, C₁-C₁₈-alkyle, C₂-C₁₈-alcényle, C₂-C₁₈-alcynyle, C₆-C₁₂-aryle, C₃-C₁₀-cycloalkyle, C₆-C₁₂-aryl-C₁-C₁₈-alkyle ou un groupe hétéroaryle, qui contient un ou plusieurs hétéroatomes du groupe formé par N, O et S ;
n représente un nombre entier de 1 à 8 ;
m représente un nombre de 0 à 1000.

8. Utilisation selon l'une quelconque des revendications 1 à 5 ou 7, le composé soufré organique dans le composant ii) étant choisi parmi :

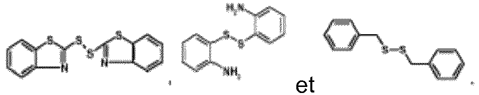

9. Utilisation selon l'une quelconque des revendications 1 à 5 ou 7, le composé soufré organique dans le composant ii) étant choisi parmi :

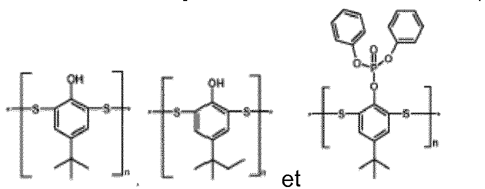

10. Utilisation selon l'une quelconque des revendications 1 à 9, le peroxyde organique dans le composant iii) étant le peroxyde de dicumyle, le peroxyde de di-tert-butyle ou le 2,5-diméthyl-2,5-di-(tert-butylperoxy)hexyne-3.

11. Utilisation selon l'une quelconque des revendications 1 à 10, le rapport pondéral des composants i) et ii) valant 1:10 à 10:1.

12. Utilisation selon l'une quelconque des revendications 1 à 11, le rapport pondéral des composants i) et iii) valant 1:10 à 10:1.

13. Système ignifuge selon l'une quelconque des revendications 1 à 12, un système ignifuge, contenant
a) un matériau contenant de la cellulose, phosphorylé par de l'acide phosphorique ou du phosphate d'ammonium en présence d'urée, et
b) du soufre élémentaire,
étant exclu.

14. Procédé pour l'apprêt retardateur de flamme de polymères moussés ou non moussés, une masse fondue du polymère ou des monomères, à partir desquels le polymère est produit, étant mélangée avec le système ignifuge selon l'une quelconque des revendications 1 à 12.

15. Composition polymère, contenant un ou plusieurs polymères thermoplastiques et le système ignifuge selon l'une quelconque des revendications 1 à 12.

16. Composition polymère selon la revendication 15, contenant 0,2 à 10 parties en poids (par rapport à 100 parties en poids du polymère) du système ignifuge.

17. Composition polymère selon la revendication 15 ou 16, **caractérisée en ce qu'**elle est exempte d'halogènes.

18. Composition polymère selon l'une quelconque des revendications 15 à 17, contenant un polymère du styrène.

19. Composition polymère selon l'une quelconque des revendications 15 à 18, **caractérisé en ce que** le polymère est une mousse.

20. Composition polymère selon la revendication 19, **caractérisée en ce que** la mousse présente une densité dans la plage de 5 à 200 kg/m³.

21. Composition polymère selon la revendication 18 sous forme d'un polymère expansible de styrène (EPS).

22. Procédé pour la préparation d'un polymère expansible de styrène (EPS) selon la revendication 21, comprenant les étapes :
a) incorporation d'un agent gonflant et d'un système ignifuge selon l'une quelconque des revendications 1 à 12 ainsi que le cas échéant d'autres adjuvants et additifs dans une masse fondue de polymère de styrène au moyen de mélangeurs statiques et/ou dynamiques à une température d'au moins 150°C,
b) refroidissement de la masse fondue de polymère de styrène contenant l'agent gonflant à une température d'au moins 120°C,
c) évacuation via une plaque de filière, comportant des trous, dont le diamètre à la sortie de la filière est d'au plus 1,5 mm et
d) granulation de la masse fondue contenant l'agent gonflant directement en aval de la plaque de filière sous eau à une pression dans la plage de 1 à 20 bars.

23. Procédé pour la préparation d'un polymère expansible de styrène selon la revendication 21, comprenant les étapes :
a) polymérisation d'un ou de plusieurs monomères de styrène en suspension,
b) addition du système ignifuge selon l'une quelconque des revendications 1 à 12 ainsi que le cas échéant d'autres adjuvants et additifs avant, pendant et/ou après la polymérisation,
c) addition d'un agent gonflant avant, pendant et/ou après la polymérisation et
d) séparation des particules expansibles de polymère de styrène, contenant le système ignifuge, de la suspension.

24. Composition polymère selon la revendication 18 sous forme d'une mousse d'extrusion de polymère de styrène (XPS).

25. Procédé pour la préparation d'une mousse d'extrusion de styrène selon la revendication 24, comprenant les étapes :
a) chauffage d'un composant polymère P, qui contient au moins un polymère de styrène, pour former une masse fondue de polymère,
b) introduction d'un composant d'agent gonflant T dans la masse fondue de polymère pour former une masse fondue pouvant être moussée,
c) extrusion de la masse fondue pouvant être moussée dans une plage de basse pression avec moussage en une mousse d'extrusion et
d) addition du système ignifuge selon l'une quelconque des revendications 1 à 12 ainsi que le cas échéant d'autres adjuvants et additifs dans au moins l'une des étapes a) et b).

26. Utilisation d'une composition polymère selon la revendication 21 ou 24 comme matériau d'isolation ou comme matériau d'emballage.
